# EUROPEAN PATENT APPLICATION

(11) **EP 4 811 434 A1**
(43) Date of publication of application: **23.09.2026**
(21) Application number: 24891780.9
(22) Date of filing: 14.11.2024
(51) Int. Cl.: H01M 4/13, H01M 4/66, H01M 4/62, H01M 10/052, H01M 4/02

(54) **NEGATIVE ELECTRODE AND LITHIUM BATTERY COMPRISING SAME**

(30) Priority: 16.11.2023 KR 20230159275
(71) Applicant: SAMSUNG SDI CO., LTD., Yongin-si, Gyeonggi-do 17084 (KR)
(72) Inventor: WOO, Hyun Sik, Yongin-Si Gyeonggi-do 17084 (KR); LEE, Kang Hee, Yongin-Si Gyeonggi-do 17084 (KR); JUNG, Kyung Hwa, Yongin-Si Gyeonggi-do 17084 (KR); MOON, Jong Seok, Yongin-Si Gyeonggi-do 17084 (KR); BAE, Woo Jin, Yongin-Si Gyeonggi-do 17084 (KR); KIM, Hee Min, Yongin-Si Gyeonggi-do 17084 (KR); PARK, Jong Seok, Yongin-Si Gyeonggi-do 17084 (KR); SHIN, Ju Hun, Yongin-Si Gyeonggi-do 17084 (KR); PYO, Su Jin, Yongin-Si Gyeonggi-do 17084 (KR); HONG, Dong Gi, Yongin-Si Gyeonggi-do 17084 (KR); PARK, Jin Hwan, Yongin-Si Gyeonggi-do 17084 (KR)
(74) Representative: Maiwald GmbH
(86) International application number: PCT/KR2024/017983
(87) International publication number: WO 2025/105834

(57) **Abstract**

Provided are a negative electrode and a lithium battery including the same, the negative electrode including a negative electrode current collector, an electrodeposition induction layer disposed on the negative electrode current collector and including a first carbon-based material, and a protective layer disposed on the electrodeposition induction layer, wherein the first carbon-based material is amorphous carbon including a nitrogen element, and a content of the nitrogen element is greater than 1 wt% based on a total weight of the electrodeposition induction layer.

## Description

### Technical Field

The present disclosure relates to a negative electrode and a lithium battery including the same.

### Background Art

Currently commercially available lithium batteries mainly use a carbon-based negative electrode active material such as graphite. The carbon-based negative electrode active material has no volume change during charge/discharge, and thus the stability of the lithium battery is high. The theoretical capacitance of graphite is as small as 372 mAh/g.

Lithium metal may be used as the negative electrode active material. Lithium metal has a very large theoretical capacitance of 3860 mAh/g. In lithium metal, dendrites may form on the surface of the lithium metal due to side reactions with electrolytes during charge/discharge, and the dendrites may grow and cause a short-circuit between a positive electrode and a negative electrode. As a result, the cycle life characteristics of a lithium battery including lithium metal are deteriorated.

A method of improving cycle life characteristics of a lithium battery including lithium metal is required.

### Disclosure of Invention

### Technical Problem

One aspect is to provide a negative electrode having a new structure.

Another aspect is to provide a lithium battery including a negative electrode having a new structure.

### Solution to Problem

According to an embodiment, there is provided a negative electrode including:
a negative electrode current collector;
an electrodeposition induction layer disposed on the negative electrode current collector and including a first carbon-based material and a first binder; and
a protective layer disposed on the electrodeposition induction layer and including a second binder,
wherein the first carbon-based material is amorphous carbon including a nitrogen element,
a content of the nitrogen element is greater than 1 wt% with respect to a total weight of the electrodeposition induction layer,
and when the first binder is a water-based binder, the second binder is an organic solvent-based binder, and when the first binder is an organic solvent-based solvent-based binder, the second binder is a water-based binder.

According to another embodiment, there is provided a lithium battery including:
a positive electrode; the negative electrode; and
an electrolyte disposed between the positive electrode and the negative electrode.

### Advantageous Effects of Invention

According to an aspect, by employing a negative electrode having a new structure, lithium is uniformly electrodeposited, and it is possible to provide a lithium battery having improved cycle characteristics.

### Brief Description of Drawings

FIG. 1 is a cross-sectional diagram of a negative electrode before charging, according to an example embodiment.
FIG. 2 is a cross-sectional diagram of a negative electrode after charging, according to an example embodiment.
FIG. 3 is a schematic diagram of a lithium metal battery according to an embodiment.
FIG. 4 is a schematic diagram of a lithium metal battery according to an embodiment.
FIG. 5 is a schematic diagram of a lithium metal battery according to an embodiment.
FIG. 6 is a cross-sectional diagram of a lithium battery according to another embodiment.
FIG. 7 is a cross-sectional diagram of a lithium battery according to another embodiment.
FIG. 8 is a scanning electron microscope (SEM) image of a negative electrode observed after a lithium electrodeposition layer is formed on an electrodeposition induction layer according to Example 4.
FIG. 9A is an SEM image of a negative electrode observed after a lithium electrodeposition layer is formed on an electrodeposition induction layer according to Comparative Example 1.
FIG. 9B is an SEM image of a negative electrode observed after a lithium electrodeposition layer is formed on an electrodeposition induction layer according to Comparative Example 2.
FIG. 9C is an SEM image of a negative electrode observed after a lithium electrodeposition layer is formed on an electrodeposition induction layer according to Comparative Example 3.

### Mode for the Invention

As a lithium battery, in a negative electrode-free lithium metal battery in which a negative electrode active material layer is absent, a lithium electrodeposition layer containing lithium is precipitated and dissolved between a negative electrode current collector and an electrolyte layer during a charge/discharge process. As charge/discharge of the negative electrode-free lithium metal battery are repeated, the lithium electrodeposition layer includes impurities remaining in an electrode, decomposition products of an electrolyte, and the like. Accordingly, due to inclusion of such impurities, a surface of the lithium electrodeposition layer becomes rough and hard. Lithium dendrites are electrodeposited on the lithium electrodeposition layer having such a rough surface. Such lithium dendrites continuously grow during the charge/discharge process to cause a short-circuit between a positive electrode and a negative electrode.

Accordingly, a negative electrode according to an aspect has a new structure so that lithium is uniformly electrodeposited and a density of a lithium electrodeposition layer may be increased. In addition, in the negative electrode according to an aspect, formation of lithium dendrites is suppressed, and as occurrence of a short-circuit of a lithium battery employing such a negative electrode is suppressed, cycle characteristics are consequently improved.

The present inventive concept described below may have various modifications and various embodiments, and specific embodiments are illustrated in the drawings and described in detail. However, this is not intended to limit the present inventive concept to specific embodiments, and it should be understood as including all modifications, equivalents, or substitutes included in the technical scope of the present inventive concept.

Terms used below are used only to describe specific embodiments and are not intended to limit the present inventive concept. Singular expressions include plural expressions unless the context clearly indicates otherwise. As used herein, terms such as "include" or "have" are intended to indicate the presence of features, numbers, steps, operations, elements, components, parts, materials, or combinations thereof described in the specification, and should be understood not to preclude the presence or addition of one or more other features, numbers, steps, operations, elements, components, ingredients, materials, or combinations thereof. As used herein, "/" may be interpreted as "and" or may be interpreted as "or" depending on the context.

In the drawings, thicknesses are exaggerated or reduced in order to clearly illustrate multiple layers and regions. Throughout the specification, like reference numerals denote like elements. Throughout the specification, when a layer, a film, a region, a plate, or the like is described as being "on" or "over" another part, this includes not only a case in which it is directly on another part but also a case in which another part is arranged therebetween. Throughout the specification, terms such as first, second, etc. may be used to describe various elements, but the elements should not be limited by the terms. The terms are used only for the purpose of distinguishing one element from another element. In the present specification and drawings, redundant descriptions of components having substantially the same functional configuration are omitted with reference to the same reference numerals.

In the present disclosure, a "particle diameter" of a particle indicates an average diameter when the particle is spherical and indicates an average major axis length when the particle is non-spherical. The particle diameter of the particle may be measured using a particle size analyzer (PSA). The "particle diameter" of the particle is, for example, an average particle diameter. The average particle diameter is, for example, a median particle diameter (D50). The median particle diameter (D50) is, for example, a particle size corresponding to 50 % cumulative volume calculated from a particle side having a smaller particle size in a particle size distribution measured by a laser diffraction method.

In the present disclosure, "metal" includes both a metal and a metalloid such as silicon and germanium in an elemental state or an ionic state.

In the present disclosure, "alloy" refers to a mixture of two or more metals.

In the present disclosure, "positive electrode active material" refers to a positive electrode material capable of undergoing lithiation and delithiation.

In the present disclosure, "negative electrode active material" refers to a negative electrode material capable of undergoing lithiation and delithiation.

In the present disclosure, "lithiation" and "lithiate" refer to a process of adding lithium to a positive electrode active material or a negative electrode active material.

In the present disclosure, "delithiation" and "delithiate" refer to a process of removing lithium from a positive electrode active material or a negative electrode active material.

In the present disclosure, "charge" and "to charge" refer to a process of providing electrochemical energy to a battery.

In the present disclosure, "discharge" and "to discharge" refer to a process of removing electrochemical energy from a battery.

In the present disclosure, "positive electrode" and "positive electrode" refer to an electrode in which electrochemical reduction and lithiation occur during a discharge process.

In the present disclosure, "negative electrode" and "anode" refer to an electrode in which electrochemical oxidation and delithiation occur during a discharge process.

Hereinafter, a negative electrode and a lithium battery including the same according to example embodiments will be described in more detail.

### [Negative electrode]

A negative electrode according to an embodiment includes a negative electrode current collector; an electrodeposition induction layer disposed on the negative electrode current collector and including a first carbon-based material and a first binder; and a protective layer disposed on the electrodeposition induction layer and including a second binder, wherein the first carbon-based material is amorphous carbon including a nitrogen element, a content of the nitrogen element is greater than 1 wt% with respect to a total weight of the electrodeposition induction layer, and when the first binder is a water-based binder, the second binder may be an organic solvent-based solvent-based binder, and when the first binder is an organic solvent-based binder, the second binder may be a water-based binder.

For example, when the first binder included in the electrodeposition induction layer is a water-based binder and the second binder included in the protective layer is an organic solvent-based binder, conversely, when the first binder included in the electrode position induction layer is an organic solvent-based binder and the second binder included in the protective layer is a water-based binder, in a process of forming the electrode position induction layer on the negative electrode current collector and forming the protective layer on the electrodeposition induction layer, by using binders having different physical properties, it may be possible to prevent a problem in which the electrode position induction layer is dissolved in a composition for forming the protective layer and the electrodeposition induction layer and the protective layer are integrated. For example, when the first binder and the second binder are both water-based binders or both organic solvent-based binders, when a composition for forming the protective layer in which the second binder is dissolved is applied on the electrodeposition induction layer, the electrodeposition induction layer is dissolved by the composition for forming the protective layer, and the electrodeposition induction layer and the protective layer are integrated, such that a lithium electrodeposition layer may not be easily formed between the electrodeposition induction layer and the protective layer during charge/discharge. In contrast, since the first binder and the second binder have different physical properties, the electrode position induction layer and the protective layer are not integrated, and a lithium electrodeposition layer may be more easily formed between the electrodeposition induction layer and the protective layer during charge/discharge.

In addition, in a negative electrode including an electrodeposition induction layer including the first carbon-based material including a nitrogen element and the first binder and a protective layer including the second binder, lithium ions may be uniformly electrodeposited between the electrodeposition induction layer and the protective layer during charge/discharge. For example, in the electrodeposition induction layer including the first carbon-based material including a nitrogen element, lithium ions are preferentially bonded to the nitrogen element and electrodeposited on a surface of the first carbon-based material, such that lithium ions may be uniformly electrodeposited between the electrode position induction layer and the protective layer. In addition, the protective layer including the second binder allows lithium ions to uniformly pass therethrough, such that lithium ions may be uniformly electrodeposited between the electrodeposition induction layer and the protective layer. For example, the first carbon-based material including a nitrogen element uniformly electrodeposits lithium ions on a surface of the electrodeposition induction layer, and the protective layer allows lithium ions to uniformly pass therethrough, such that formation and/or growth of lithium dendrites may be effectively prevented. Accordingly, stability of a negative electrode including the electrode position induction layer including the first carbon-based material including a nitrogen element and the first binder and the protective layer including the second binder and a lithium battery employing the same is improved, and cycle characteristics of the lithium battery are improved. In contrast, in an electrodeposition induction layer including a first carbon-based material that does not include a nitrogen element or in which a content of the nitrogen element is 10 wt% or less with respect to a total weight of the first carbon-based material, a content of the nitrogen element included in the electrodeposition induction layer corresponds to 1 wt% or less, such that lithium ions may not be uniformly electrodeposited.

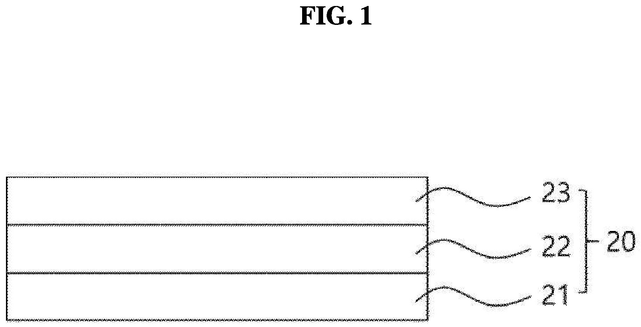

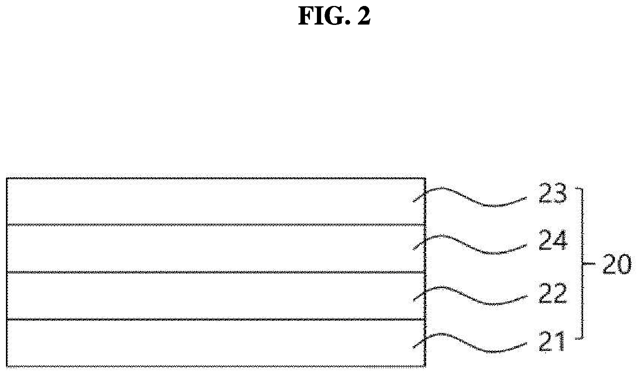

FIG. 1 is a cross-sectional diagram of a negative electrode according to an example embodiment before charging. FIG. 2 is a cross-sectional diagram of a negative electrode according to an example embodiment after charging.

Referring to FIG. 1, before charging, a negative electrode 20 includes a negative electrode current collector 21; an electrodeposition induction layer 22 disposed on the negative electrode current collector 21 and including a first carbon-based material and a first binder; and a protective layer 23 disposed on the electrodeposition induction layer 22 and including a second binder, wherein the first carbon-based material is amorphous carbon including a nitrogen element, a content of the nitrogen element is greater than 1 wt% with respect to a total weight of the electrodeposition induction layer, and when the first binder is a water-based binder, the second binder is an organic solvent-based binder, and when the first binder is an organic solvent-based binder, the second binder is a water-based binder.

Referring to FIG. 2, after charging, a negative electrode 20 includes a negative electrode current collector 21; an electrodeposition induction layer 22 disposed on the negative electrode current collector 21 and including a first carbon-based material and a first binder; a protective layer 23 disposed on the electrodeposition induction layer 22 and including a second binder; and a lithium electrodeposition layer 23 disposed between the electrode position induction layer 22 and the protective layer 23, wherein the first carbon-based material is amorphous carbon including a nitrogen element, a content of the nitrogen element is greater than 1 wt% with respect to a total weight of the electrodeposition induction layer, and when the first binder is a water-based binder, the second binder is an organic solvent-based binder, and when the first binder is an organic solvent-based binder, the second binder is a water-based binder.

For example, the water-based binder refers to a water-soluble binder having excellent solubility in water, and the organic solvent-based binder refers to a binder having excellent solubility in an organic solvent-based solvent, particularly a binder having excellent solubility in NMP.

According to an embodiment, when the first binder is a water-based binder, the second binder may be an organic solvent-based binder. According to another embodiment, when the first binder is an organic solvent-based binder, the second binder may be a water-based binder.

According to an embodiment, the first binder may be a water-based binder, and the second binder may be an organic solvent-based binder.

### [Negative electrode: Negative electrode Current Collector]

Referring to FIG. 1 and FIG. 2, the negative electrode 20 includes a negative electrode current collector 21.

A material constituting the negative electrode current collector 21 may be any material that does not react with lithium, that is, does not form an alloy or compound with lithium, and has conductivity. The negative electrode current collector 21 is, for example, a metal or an alloy. the negative electrode current collector 21 may consist of, for example, indium (In), copper (Cu), magnesium (Mg), stainless steel (SUS), titanium (Ti), iron (Fe), cobalt (Co), nickel (Ni), zinc (Zn), aluminum (Al), germanium (Ge), lithium (Li), or an alloy thereof.

The negative electrode current collector 21 includes, for example, a first metal substrate. The first metal substrate includes a first metal as a main component or consists of the first metal. The first metal substrate includes a first metal as a main component or consists of the first metal. A content of the first metal included in the first metal substrate is, for example, 90 wt% or more, 95 wt% or more, 99 wt% or more, or 99.9 wt% or more with respect to a total weight of the first metal substrate. The first metal substrate may consist of, for example, a material that does not react with lithium, that is, does not form an alloy and/or compound with lithium.

The first metal is, for example, copper (Cu), nickel (Ni), stainless steel (SUS), iron (Fe), cobalt (Co), and the like, but is not limited thereto, and any material used as a current collector in the art may be used. The first metal substrate may consist of, for example, one of the aforementioned metals or may consist of an alloy of two or more metals. The first metal substrate is, for example, in a sheet or foil form. A thickness of the negative electrode current collector 21 may be, for example, 5 µm to 50 µm, 10 µm to 50 µm, 10 µm to 40 µm, or 10 µm to 30 µm, but is not necessarily limited thereto and may be selected according to required characteristics of the lithium battery.

The negative electrode current collector 21 may further include a coating layer (not illustrated) including a second metal on the first metal substrate.

The negative electrode current collector 21 may include, for example, a first metal substrate; and a coating layer disposed on the first metal substrate and including a second metal. The second metal has higher Mohs hardness than the first metal. That is, since the coating layer including the second metal is harder than the substrate including the first metal, deterioration of the first metal substrate may be prevented. A Mohs hardness of a material constituting the first metal substrate is, for example, 5.5 or less. A Mohs hardness of the first metal is, for example, 5.5 or less, 5.0 or less, 4.5 or less, 4.0 or less, 3.5 or less, or 3.0 or less. The Mohs hardness of the first metal may be, for example, 2.0 to 6.0. The coating layer includes a second metal. The coating layer includes, for example, a second metal as a main component or consists of the second metal. A content of the second metal included in the coating layer is, for example, 90 wt% or more, 95 wt% or more, 99 wt% or more, or 99.9 wt% or more with respect to a total weight of the coating layer. The coating layer may consist of, for example, a material that does not react with lithium, that is, does not form an alloy and/or compound with lithium. A Mohs hardness of a material constituting the coating layer is, for example, 6.0 or more. For example, a Mohs hardness of the second metal is 6.0 or more, 6.5 or more, 7.0 or more, 7.5 or more, 8.0 or more, 8.5 or more, or 9.0 or more. The Mohs hardness of the second metal may be, for example, 6.0 to 12. When the Mohs hardness of the second metal is excessively low, it may be difficult to suppress deterioration of the negative electrode current collector. When the Mohs hardness of the second metal is excessively high, processability may not be easy. The second metal is, for example, one or more selected from titanium (Ti), manganese (Mn), niobium (Nb), tantalum (Ta), iridium (Ir), vanadium (V), rhenium (Re), osmium (Os), tungsten (W), chromium (Cr), boron (B), ruthenium (Ru), and rhodium (Rh). The coating layer may consist of, for example, one of the aforementioned metals or may consist of an alloy of two or more metals. A difference in Mohs hardness between the first metal included in the first metal substrate and the second metal included in the coating layer may be, for example, 2 or more, 2.5 or more, 3 or more, 3.5 or more, or 4 or more. As the first metal and the second metal have such a difference in Mohs hardness, deterioration of the negative electrode current collector may be more effectively suppressed. The coating layer may have a single-layer structure or a multi-layer structure of two or more layers. The coating layer may have, for example, a two-layer structure including a first coating layer and a second coating layer. The coating layer may have, for example, a three-layer structure including a first coating layer, a second coating layer, and a third coating layer. A thickness of the coating layer may be, for example, 10 nm to 1 µm, 50 nm to 500 nm, 50 nm to 200 nm, or 50 nm to 150 nm. When the thickness of the coating layer is excessively small, it may be difficult to suppress non-uniform growth of a lithium-containing metal layer. As the thickness of the coating layer increases, cycle characteristics of the lithium battery are improved, but when the thickness of the coating layer is excessively large, energy density of the lithium battery is reduced and formation of the coating layer may not be easy. The coating layer may be disposed on the first metal substrate by, for example, a vacuum electrodeposition method, a sputtering method, a plating method, or the like, but is not necessarily limited thereto, and any method capable of forming the coating layer in the art may be used.

For example, the negative electrode current collector 21 may have a reduced thickness compared to a negative electrode current collector included in a conventional negative electrode. Accordingly, the negative electrode according to the present disclosure is distinguished from a conventional electrode including a thick current collector by including, for example, a thin current collector. By employing a thin current collector having a reduced thickness in the electrode according to an embodiment, a thickness of a lithium electrodeposition layer in the negative electrode including the thin current collector may be relatively increased. As a result, energy density of a lithium battery employing such an electrode is increased. A thickness of the negative electrode current collector 21 may be, for example, less than 15 µm, 14.5 µm or less, or 14 µm or less. The thickness of the negative electrode current collector 21 may be, for example, 0.1 µm to less than 15 µm, 1 µm to 14.5 µm, 2 µm to 14 µm, 3 µm to 14 µm, 5 µm to 14 µm, or 10 µm to 14 µm.

The negative electrode current collector 21 may have a form selected from, for example, a sheet, a foil, a film, a plate, a porous body, a mesoporous body, a through-hole-containing body, a polygonal ring body, a mesh body, a foam body, and a nonwoven fabric body, not necessarily limited to such a shape and may have any form used in the art.

The negative electrode current collector 21 may include, for example, a base film and a metal substrate layer disposed on one surface or both surfaces of the base film. The negative electrode current collector 21 may include a substrate, and the substrate may have a structure including, for example, a base film and a metal substrate layer disposed on one surface or both surfaces of the base film. An intermediate layer may be further disposed on the metal substrate layer.

For example, the base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The base film includes a thermoplastic polymer, which may suppress a rapid increase in current by melting the base film in the event of a short-circuit. The base film may be, for example, an insulator. The metal substrate layer may include, for example, copper (Cu), stainless steel, titanium (Ti), iron (Fe), cobalt (Co), nickel (Ni), or an alloy thereof. The metal substrate layer may function as an electrochemical fuse and may be cut off during over-current to perform a short-circuit prevention function. A limit current and a maximum current may be controlled by adjusting a thickness of the metal substrate layer. The metal substrate layer may be plated or electrodeposited on the base film. As the thickness of the metal substrate layer decreases, a limit current and/or a maximum current of the negative electrode current collector 21 decreases, and thus stability of a lithium metal battery during a short-circuit may be improved. A lead tab may be further added on the metal substrate layer for connection with an external part. The lead tab may be welded to the metal substrate layer or a metal substrate layer/base film laminate by ultrasonic welding, laser welding, spot welding, or the like. During welding, as the base film and/or the metal substrate layer is melted, the metal substrate layer may be electrically connected to the lead tab. In order to more firmly weld the metal substrate layer and the lead tab, a metal chip may be additionally disposed between the metal substrate layer and the lead tab. The metal chip may be a thin piece of the same material as the metal of the metal substrate layer. The metal chip may be, for example, a metal foil or a metal mesh. The metal chip may be, for example, an aluminum foil, a copper foil, or an SUS foil. After disposing the metal chip on the metal substrate layer, the lead tab may be welded such that the lead tab is welded to a metal chip/metal substrate layer laminate or a metal chip/metal substrate layer/base film laminate. During welding, as the base film, the metal layer, and/or the metal chip is melted, the metal layer or the metal layer/metal chip laminate may be electrically connected to the lead tab. A metal chip and/or a lead tab may be additionally disposed on a portion of the metal substrate layer. A thickness of the base film may be, for example, 1 to 50 µm, 1.5 to 50 µm, 1.5 to 40 µm, or 1 to 30 µm. As the base film has a thickness within such a range, a weight of a negative electrode assembly may be more effectively reduced. A melting point of the base film may be, for example, 100 to 300 °C, 100 to 250 °C or less, or 100 to 200 °C. As the base film has a melting point within such a range, the base film is melted during a process of welding the lead tab and may be easily bonded to the lead tab. In order to improve adhesion between the base film and the metal substrate layer, a surface treatment such as corona treatment may be carried out on the base film. A thickness of the metal substrate layer may be, for example, 0.01 to 3 µm, 0.1 to 3 µm, 0.1 to 2 µm, or 0.1 to 1 µm. As the metal substrate layer has a thickness within such a range, stability of the negative electrode may be secured while maintaining conductivity. A thickness of the metal chip may be, for example, 2 to 10 µm, 2 to 7 µm, or 4 to 6 µm. As the metal chip has a thickness within such a range, connection between the metal layer and the lead tab may be more easily performed. As the negative electrode current collector 21 has such a structure, weight of the electrode may be reduced and consequently energy density may be improved.

### [Negative electrode: electrodeposition induction layer]

Referring to FIG. 1 and FIG. 2, the negative electrode 20 includes a negative electrode current collector 21; and an electrodeposition induction layer 22 disposed on the negative electrode current collector 21. The electrodeposition induction layer 22 includes a first carbon-based material and a first binder. The first carbon-based material is amorphous carbon including a nitrogen element, and a content of the nitrogen element is greater than 1 wt% with respect to a total weight of the electrodeposition induction layer 22. Since the electrodeposition induction layer 22 includes the first carbon-based material including a nitrogen element, lithium metal may be more uniformly electrodeposited on the electrodeposition induction layer. In particular, since the content of the nitrogen element satisfies greater than 1 wt% with respect to the total weight of the electrodeposition induction layer, a density of a lithium electrodeposition layer formed on the electrode position induction layer increases, and formation and/or growth of lithium dendrites may be effectively prevented.

In addition, since the first binder has different physical properties from the second binder as described above, in a process of forming the protective layer 23 on the electrode position induction layer 22, a problem in which the electrodeposition induction layer 22 is dissolved by a composition for forming the protective layer may be prevented, such that the protective layer 23 may be more easily formed on the electrodeposition induction layer 22. In addition, a lithium electrodeposition layer 24 may be more easily formed between the electrodeposition induction layer 22 and the protective layer 23 during charge/discharge.

According to an embodiment, the content of the nitrogen element is, with respect to the total weight of the electrodeposition induction layer, 1.1 wt% or more, 1.2 wt% or more, 1.1 wt% to 10 wt%, or 1.2 wt% to 10 wt%.

According to an embodiment, in the first carbon-based material, the content of the nitrogen element may be greater than 10 wt%, 11 wt% or more, or 12 wt% or more with respect to the total weight of the first carbon-based material. When the content of the nitrogen element in the first carbon-based material satisfies the above range, it is possible to more easily satisfy that the content of the nitrogen element in the electrode position induction layer 22 is greater than 1 wt%.

According to an embodiment, the first carbon-based material may be a carbide of a polymer including a nitrogen element. For example, the first carbon-based material may be a carbide prepared by carbonizing a polymer including a nitrogen element at a temperature of 800 °C or higher. For example, carbonization of the polymer including a nitrogen element may be carried out at a temperature of 800 °C or higher in a nitrogen atmosphere for 3 hours or more.

According to an embodiment, the polymer including a nitrogen element may include sulfurized polyacrylonitrile (SPAN). For example, the sulfurized polyacrylonitrile may have improved structural stability by including a three-dimensionally cross-linked fused ring. In particular, the sulfurized polyacrylonitrile may include a large amount of a nitrogen (N) element derived from a nitrile group included in the three-dimensionally cross-linked fused ring. Since the nitrogen element included in the sulfurized polyacrylonitrile is included in the fused ring, even when the sulfurized polyacrylonitrile is carbonized at a temperature of 800 °C or higher, the nitrogen element remains in the carbide, and accordingly, a first carbon-based material in which the content of the nitrogen element in the first carbon-based material exceeds 10 wt% with respect to the total weight of the first carbon-based material may be more easily prepared. In addition, the electrode position induction layer 22 including the first carbon-based material in which the content of the nitrogen element in the first carbon-based material exceeds 10 wt% with respect to the total weight of the first carbon-based material may more easily satisfy that the content of the nitrogen element exceeds 1 wt%. For example, the nitrogen element included in the first carbon-based material may react with lithium ions during a charge/discharge process to form lithium nitride such as Li₃N, and such lithium nitride may uniformly electrodeposit lithium ions on the electrodeposition induction layer.

For example, the sulfurized polyacrylonitrile may be prepared by heating a raw material powder, for example, including sulfur powder and polyacrylonitrile powder under a sealed non-oxidizing atmosphere. When the sulfur powder and the polyacrylonitrile powder are heated, a ring closure reaction in which polyacrylonitrile is three-dimensionally cross-linked to form a fused ring, for example a 6-membered ring, and a reaction between sulfur and polyacrylonitrile proceed simultaneously, such that sulfurized polyacrylonitrile in which sulfur is bonded to the fused ring may be obtained. In this case, the fused ring may include a nitrogen element. Accordingly, in preparing the first carbon-based material by carbonizing a polymer including sulfurized polyacrylonitrile, since the nitrogen element included in the fused ring of the sulfurized polyacrylonitrile remains without being decomposed during the carbonization process, the content of the nitrogen element included in the first carbon-based material may easily satisfy greater than 10 wt%. The electrodeposition induction layer including the first carbon-based material including the nitrogen element may more easily satisfy that the content of the nitrogen element included in the electrodeposition induction layer exceeds 1 wt%, such that lithium may be uniformly electrodeposited on the electrodeposition induction layer.

According to an embodiment, the first carbon-based material may be amorphous carbon further including a sulfur element. For example, when the first carbon-based material further includes sulfur, the nitrogen element may be more easily retained during preparation of the first carbon-based material.

For example, the first carbon-based material may be a carbide of a polymer including a nitrogen element and a sulfur element. For example, carbonization of the polymer including a nitrogen element and a sulfur element may be carried out at a temperature of 800 °C or higher in a nitrogen atmosphere.

According to an embodiment, the polymer including a nitrogen element and a sulfur element may include sulfurized polyacrylonitrile. For example, the sulfurized polyacrylonitrile may include a fused ring in which a plurality of sulfur elements are continuously bonded. For example, the sulfurized polyacrylonitrile may include a fused ring formed by continuously bonding three or more sulfur elements. In this case, the fused ring in which sulfur elements are continuously bonded may include a nitrogen element. Accordingly, the polymer including sulfurized polyacrylonitrile includes a large amount of nitrogen element included in the fused ring, and as the nitrogen element remains without being decomposed during a process of carbonizing the polymer, the content of the nitrogen element in the first carbon-based material may be increased. In addition, since the sulfur element included in the polymer is decomposed and removed during the carbonization process, a ratio of the nitrogen element in the polymer may be further increased.

According to an embodiment, a content of the sulfur element in the first carbon-based material may be 0.1 to 50 wt%.

According to an embodiment, when the first carbon-based material includes a sulfur element, the electrodeposition induction layer 22 including the first carbon-based material may further include Li₂S. Since Li₂S has ionic conductivity of, for example, 1×10⁻⁵ S/cm or more, Li₂S may provide additional ionic conductivity to the electrodeposition induction layer 22. Li₂S may be derived from the sulfur element included in the first carbon-based material. Li₂S may be generated, for example, by a reaction between the sulfur element included in the first carbon-based material and lithium ions during charging of the lithium battery. As the electrodeposition induction layer 22 further includes Li₂S, ion conductivity of the electrodeposition induction layer 22 may be increased.

According to an embodiment, an intensity ratio (Id/Ig) of a D peak to a G peak obtained from a Raman analysis spectrum of the first carbon-based material may be 0.8 to 1.5. From this, it may be confirmed that the first carbon-based material is amorphous carbon within the range of the intensity ratio (Id/Ig) of the D peak to the G peak.

According to an embodiment, the first carbon-based material may be, for example, in a particle form. An average particle diameter of the first carbon-based material may be, for example, 50 nm to 10 µm, or 500 nm to 10 µm. As the first carbon-based material has an average particle diameter within such a range, lithium ions may be more uniformly electrodeposited on the electrodeposition induction layer.

A content of the first carbon-based material may be, for example, 1 to 99 wt%, 10 to 90 wt%, 20 to 80 wt%, 20 to 50 wt%, or 30 to 50 wt% with respect to a total weight of the electrode position induction layer 22. As the electrodeposition induction layer 22 includes the first carbon-based material within such a range, cycle characteristics of a lithium battery including the electrodeposition induction layer 22 may be further improved.

The electrodeposition induction layer 22 may further include a second carbon-based material. For example, the electrodeposition induction layer 22 may further include a second carbon-based material different from the first carbon-based material. The electrode position induction layer 22 may include, for example, the first carbon-based material and the second carbon-based material, and the first carbon-based material and the second carbon-based material may be different from each other. The second carbon-based material may be, for example, a carbon-based conductive material. As the electrode position induction layer 22 further includes the second carbon-based material, internal resistance of the electrodeposition induction layer 22 is reduced and conductivity may be imparted to the protective layer.

According to an embodiment, as the electrodeposition induction layer 22 further includes the second carbon-based material, dispersibility of the first carbon-based material may be improved. Accordingly, lithium ions are more uniformly electrodeposited on the electrodeposition induction layer 22, such that local electrodeposition and/or growth of lithium dendrites may be more effectively prevented. For example, the second carbon-based material may act as a carbon-based dispersant.

According to an embodiment, the second carbon-based material may be, for example, amorphous carbon. As the electrodeposition induction layer 22 includes the second carbon-based material that is amorphous carbon, lithium ions may move more rapidly through a surface of the amorphous carbon. The second carbon-based material may be porous or non-porous. The second carbon-based material may be, for example, in a particle form. The second carbon-based material may be, for example, spherical particles, plate-shaped particles, needle-shaped particles, or a combination thereof. The second carbon-based material particles may have, for example, an irregular shape. An average particle diameter of the second carbon-based material may be, for example, 10 nm to 500 nm, 10 nm to 300 nm, 10 nm to 200 nm, 10 nm to 100 nm, 10 nm to 50 nm, 30 nm to 50 nm, or 40 nm to 50 nm. As the second carbon-based material has a particle diameter within such a range, cycle characteristics of a lithium battery including the electrode position induction layer may be further improved. The particle diameter of the carbon-based material may be measured by, for example, a laser diffraction method, a scanning electron microscope, a transmission electron microscope, or an atomic force microscope.

According to an embodiment, the second carbon-based material may include carbon black, acetylene black, denka black, ketjen black, carbon nanotubes, carbon nanofibers, carbon nanobelts, graphene, graphene oxide, fullerene, activated carbon, carbon fibers, or a combination thereof. For example, the second carbon-based material may include carbon black, acetylene black, denka black, ketjen black, or a combination thereof.

A content of the second carbon-based material may be, for example, 1 to 99 wt%, 10 to 50 wt%, or 20 to 40 wt% with respect to a total weight of the electrodeposition induction layer. As the electrodeposition induction layer 22 includes the second carbon-based material within such a range, cycle characteristics of a lithium battery including the electrode position induction layer 22 may be further improved.

According to an embodiment, a ratio of the content of the first carbon-based material to the content of the second carbon-based material may be 1:99 to 99:1, 10:90 to 90:10, 1:99 to 50:50, or 10:90 to 50:50.

The electrodeposition induction layer 22 may further include, for example, a metal oxide. The electrodeposition induction layer 22 may include, for example, the first carbon-based material and the metal oxide together. The electrodeposition induction layer 22 may include, for example, the first carbon-based material, the second carbon-based material, and the metal oxide together. The electrodeposition induction layer 22 including the first carbon-based material and the metal oxide together is, for example, an organic-inorganic solvent-based composite layer. As the electrodeposition induction layer 22 further includes the metal oxide, strength and/or elasticity of the electrodeposition induction layer 22 may be improved. Since durability of the electrodeposition induction layer 22 is improved, cycle characteristics of a lithium battery including the electrode position induction layer 22 may be further improved.

The metal oxide may be, for example, in a particle form. A shape of the metal oxide particles is not particularly limited. The metal oxide particles may be, for example, spherical particles, plate-shaped particles, needle-shaped particles, or a combination thereof. The metal oxide particles may have, for example, an irregular shape. An average particle diameter of the metal oxide may be, for example, 100 nm to 2 µm, 200 nm to 1 µm, or 400 nm to 1 µm. As the metal oxide has a particle diameter within such a range, cycle characteristics of a lithium battery including the electrodeposition induction layer 22 may be further improved. The metal oxide may be, for example, porous or non-porous. The metal oxide may be, for example, crystalline or amorphous.

The metal oxide may include, for example, Nb₂O₅, TiO₂, Al₂O₃, SiO₂, BaTiO₃, metal organic framework (MOF), polyhedral oligomeric silsesquioxanes (POSS), Li₂CO₃, Li₃PO₄, Li₂O, montmorillonite, ZrO₂, CeO₂, Mn₃O₄, or a combination thereof, but is not necessarily limited thereto, and any material used as a metal oxide in the art may be used.

The metal oxide may have, for example, lithiophilicity. The metal oxide having lithiophilicity may react with lithium ions during a charge/discharge process of a lithium battery. The metal oxide may include, for example, a pseudo-capacitive oxide that reacts with lithium to form a lithium metal oxide. The oxide providing pseudo-capacitance may be, for example, Nb₂O₃ or TiO₂. Nb₂O₅ may have, for example, an orthorhombic crystal structure. Nb₂O₅ may react with lithium ions, for example, during charging of a lithium battery to form LiₓNb₂O₅ (0<x<1). The pseudo-capacitive oxide may act, for example, as a pseudo capacitor to store and/or disperse lithium on the electrode position induction layer 22. As lithium ion conduction characteristics of the electrode position induction layer 22 including the pseudo-capacitive oxide are improved and localization of lithium is prevented, lithium ions may be more uniformly electrodeposited on the electrodeposition induction layer 22.

A content of the metal oxide may be, for example, 5 to 60 parts by weight, 10 to 50 parts by weight, 10 to 40 parts by weight, or 10 to 30 parts by weight of metal oxide per 100 parts by weight of the first carbon-based material. A content of the metal oxide included in the electrodeposition induction layer 22 may be, for example, 1 to 40 wt%, 5 to 30 wt%, or 5 to 20 wt% with respect to a total weight of the protective layer. As the electrodeposition induction layer 22 includes the metal oxide within such a range, cycle characteristics of a lithium battery including the electrodeposition induction layer 22 may be further improved.

The electrode position induction layer 22 may include, for example, 5 to 40 parts by weight of the metal oxide and 50 to 100 parts by weight of the second carbon-based material with respect to 100 parts by weight of the first carbon-based material. As the electrode position induction layer 22 has such a composition, cycle characteristics of a lithium battery including the electrodeposition induction layer 22 may be further improved.

According to an embodiment, the first binder included in the electrode position induction layer 22 may further improve binding force between the first carbon-based materials. As the electrodeposition induction layer 22 includes the first binder, the electrode position induction layer 22 maintains a certain shape and mechanical strength of the electrodeposition induction layer 22 may be improved.

According to an embodiment, the first binder may be a water-based binder or an organic solvent-based binder. For example, the first binder may be a water-based binder.

According to an embodiment, the first binder may be, for example, a water-based acrylic binder. For example, the first binder may be an acrylic binder, which may include poly(meth)acrylic acid, poly(meth)acrylate, polymethyl(meth)acrylate, polyacrylonitrile, or an acrylonitrile-styrene-butadiene copolymer.

According to an embodiment, the electrodeposition induction layer 22 may further include a binder. For example, the binder may be a non-conductive binder or a conductive binder. The conductive binder may be, for example, an ion-conductive binder, an electron-conductive binder, or a combination thereof.

The binder may include, for example, polystyrene sulfonate (PSS), polyvinylidene fluoride-hexafluoropropylene copolymer (PVDF-HFP), polyvinyl fluoride (PVF), polyvinylidene fluoride (PVDF), poly(meth)acrylic acid, poly(meth)acrylate, polymethyl methacrylate (PMMA), polyethylene oxide (PEO), polyethylene glycol (PEG), polyacrylonitrile (PAN), acrylonitrile-styrene-butadiene copolymer, polytetrafluoroethylene (PTFE), polyethylenedioxythiophene (PEDOT), polypyrrole (PPY), polyaniline, polyacetylene, styrene-butadiene rubber (SBR), polyimide (PI), polyamideimide (PAI), carboxymethyl cellulose (CMC), polyvinyl chloride (PVC), modified polyphenylene oxide (PPO), polyethylene (PE), polypropylene (PP), and the like, but is not necessarily limited thereto. The ion-conductive binder may include a polar functional group. The ion-conductive binder including a polar functional group may be, for example, Nafion, Aquivion, Flemion, Gore, Aciplex, Morgane ADP, sulfonated poly(ether ether ketone) (SPEEK), sulfonated poly(arylene ether ketone ketone sulfone) (SPAEKKS), sulfonated poly(aryl ether ketone) (SPAEK), poly[bis(benzimidazobenzisoquinolinones)] (SPBIBI), poly(styrene sulfonate) (PSS), lithium 9,10-diphenylanthracene-2-sulfonate (DPASLi+), and the like. The electron-conductive binder may be, for example, polyacetylene, polythiophene, polypyrrole, poly(p-phenylene), poly(phenylenevinylene), poly(phenylenesulfide), polyaniline, and the like.

According to an embodiment, a thickness of the electrodeposition induction layer 22 may be, for example, 1 µm to 50 µm, 1 µm to 20 µm, 1 µm to 10 µm, 1 µm to 5 µm, or 1 µm to 3 µm, but is not necessarily limited thereto and may be adjusted according to a form and capacity of a required lithium battery. When the thickness of the electrode position induction layer 22 is excessively small, it may be difficult to perform a function of the electrodeposition induction layer 22. When the thickness of the electrodeposition induction layer 22 is excessively large, internal resistance increases and energy density of the lithium battery may be reduced.

### [Negative electrode: Protective Layer]

Referring to FIG. 1 and FIG. 2, the negative electrode 20 may include a negative electrode current collector 21; an electrodeposition induction layer 22 arranged on the negative electrode current collector 21; and a protective layer 23 arranged on the electrode position induction layer 22 and including a second binder. For example, lithium ions pass through the protective layer 23, such that a lithium electrodeposition layer 24 may be formed between the electrodeposition induction layer 22 and the protective layer 23 after the lithium ions pass through the protective layer 23. In particular, the protective layer 23 includes the second binder having physical properties different from those of the first binder, thereby allowing the protective layer 23 to be more easily formed on the electrode position induction layer 22.

According to an embodiment, the protective layer 23 may include a second binder including at least one selected from the group consisting of a repeating unit (A) derived from an ethylene-based unsaturated monomer including a carboxyl group; a repeating unit (B) derived from an ethylene-based unsaturated monomer including a nitrile group; a repeating unit (C) derived from an ethylene-based unsaturated monomer including a polyalkylene glycol group; a repeating unit (D) derived from an ethylene-based unsaturated monomer including a fluorine group; and a repeating unit (E) derived from an ethylene-based unsaturated monomer including an ammonium group. For example, the second binder may be an organic solvent-based binder.

For example, the second binder includes at least one selected from the group consisting of a repeating unit (A) derived from an ethylene-based unsaturated monomer including a carboxyl group; a repeating unit (B) derived from an ethylene-based unsaturated monomer including a nitrile group; a repeating unit (C) derived from an ethylene-based unsaturated monomer including a polyalkylene glycol group; a repeating unit (D) derived from an ethylene-based unsaturated monomer including a fluorine group; and a repeating unit (E) derived from an ethylene-based unsaturated monomer including an ammonium group, thereby improving strength, flexibility, and lithium ion conductivity of the protective layer 23 including the second binder. Accordingly, lithium ions are more uniformly electrodeposited between the electrodeposition induction layer 22 and the protective layer 23, and a lithium battery including the protective layer 23 including the second binder may have improved electrodeposition density of the lithium electrodeposition layer 24.

For example, the ethylene-based unsaturated monomer including a carboxyl group may improve strength of the second binder. The protective layer 23 including the second binder having improved strength has reduced expandability, thereby improving electrode stability of the negative electrode 20 including the protective layer 23. Accordingly, lifespan characteristics of a lithium battery including the second binder may be improved.

According to an embodiment, the ethylene-based unsaturated monomer including a carboxyl group may be represented by Formula 1.

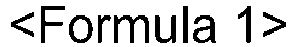

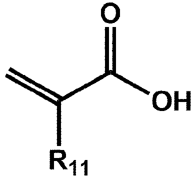

In Formula 1,
R₁₁ is hydrogen; a C1-C10 alkyl group unsubstituted or substituted with halogen; a C6-C20 aryl group unsubstituted or substituted with halogen; or a C2-C20 heteroaryl group unsubstituted or substituted with halogen.

According to an embodiment, in Formula 1, R₁₁ may be hydrogen or a C1-C10 alkyl group unsubstituted or substituted with halogen. For example, in Formula 1, R₁₁ may be hydrogen, a methyl group, or an ethyl group.

According to an embodiment, the ethylene-based unsaturated monomer including a carboxyl group may be acrylic acid or methacrylic acid.

According to an embodiment, the ethylene-based unsaturated monomer including a carboxyl group may further include an ethylene-based unsaturated monomer including a carboxyl group in which hydrogen of the carboxyl group is substituted with lithium. For example, when the ethylene-based unsaturated monomer including a carboxyl group further includes an ethylene-based unsaturated monomer including a carboxyl group in which hydrogen of the carboxyl group is substituted with lithium, lithium conductivity of the second binder may be improved. Accordingly, internal resistance of the protective layer 23 including the second binder is reduced, internal resistance of a lithium battery including the electrodeposition induction layer is reduced, and charge/discharge efficiency may be improved.

According to an embodiment, the ethylene-based unsaturated monomer including a carboxyl group in which hydrogen of the carboxyl group is substituted with lithium may be represented by Formula 1-1.

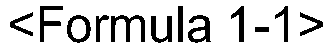

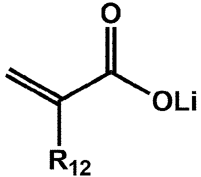

In Formula 1-1,
R₁₂ is hydrogen; a C1-C10 alkyl group unsubstituted or substituted with halogen; a C6-C20 aryl group unsubstituted or substituted with halogen; or a C2-C20 heteroaryl group unsubstituted or substituted with halogen.

According to an embodiment, in Formula 1-1, R₁₂ may be hydrogen or a C1-C10 alkyl group unsubstituted or substituted with halogen. For example, in Formula 1-1, R₁₂ may be hydrogen, a methyl group, or an ethyl group.

According to an embodiment, a content of the ethylene-based unsaturated monomer including a carboxyl group in which hydrogen of the carboxyl group is substituted with lithium among the ethylene-based unsaturated monomers including a carboxyl group may be 50 to 90 mol%.

For example, the repeating unit (B) derived from the ethylene-based unsaturated monomer including a nitrile group may improve flexibility of the second binder. For example, as the second binder includes the repeating unit (B) derived from the ethylene-based unsaturated monomer including a nitrile group and thus has improved flexibility, flexibility of the protective layer 23 including the second binder is improved, thereby preventing cracks and damage that may occur in the protective layer 23 during a process of manufacturing a lithium battery using the second binder. In addition, as flexibility of the protective layer 23 is improved, cracks and damage that may occur in the protective layer 23 during a process of forming the lithium electrodeposition layer 24 between the electrode position induction layer 22 and the protective layer 23 may be prevented.

According to an embodiment, the ethylene-based unsaturated monomer including a nitrile group may be represented by Formula 2.

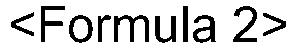

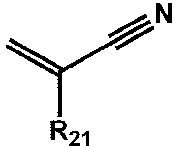

In Formula 2,
R₂₁ is hydrogen; a C1-C10 alkyl group unsubstituted or substituted with halogen; a C6-C20 aryl group unsubstituted or substituted with halogen; or a C2-C20 heteroaryl group unsubstituted or substituted with halogen.

According to an embodiment, in Formula 2, R₂₁ may be hydrogen or a C1-C10 alkyl group unsubstituted or substituted with halogen. For example, in Formula 2, R₂₁ may be hydrogen, a methyl group, or an ethyl group.

According to an embodiment, the ethylene-based unsaturated monomer including a nitrile group may be acrylonitrile or methacrylonitrile.

For example, the ethylene-based unsaturated monomer including a polyalkylene glycol group may improve lithium conductivity of the second binder. For example, lithium ion conductivity may be improved by the polyalkylene glycol group included in the ethylene-based unsaturated monomer. Accordingly, internal resistance of the protective layer 23 including the second binder may be reduced. In addition, lithium ion conductivity of the second binder is improved, such that lithium ions uniformly pass through the protective layer 23, whereby the lithium electrodeposition layer 24 may be more uniformly electrodeposited on the electrodeposition induction layer 22.

According to an embodiment, the ethylene-based unsaturated monomer including a polyalkylene glycol group may be represented by Formula 3.

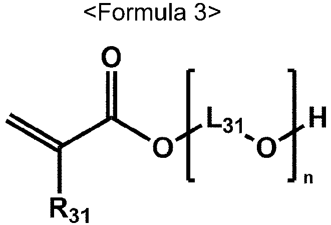

In Formula 3,
R₃₁ is hydrogen; a C1-C10 alkyl group unsubstituted or substituted with halogen; a C6-C20 aryl group unsubstituted or substituted with halogen; or a C2-C20 heteroaryl group unsubstituted or substituted with halogen, L₃₁ is a C1-C10 alkylene group unsubstituted or substituted with halogen, and n is an integer of 1 or more.

According to an embodiment, in Formula 3, R₃₁ may be hydrogen or a C1-C10 alkyl group unsubstituted or substituted with halogen. For example, in Formula 3, R₃₁ may be hydrogen, a methyl group, or an ethyl group.

According to an embodiment, in Formula 3, L₃₁ may be a methylene group, an ethylene group, a propylene group, or a butylene group.

According to an embodiment, in Formula 3, n may be an integer of 2 or more.

According to an embodiment, the ethylene-based unsaturated monomer including a polyalkylene glycol group may be poly(ethylene glycol) (meth)acrylate.

According to an embodiment, a weight average molecular weight (Mw) of the ethylene-based unsaturated monomer including a polyalkylene glycol group may be 900 g/mol. For example, the weight average molecular weight (Mw) of the ethylene-based unsaturated monomer including a polyalkylene glycol group may be 300 to 900 g/mol or 300 to 600 g/mol. For example, when the weight average molecular weight (Mw) of the ethylene-based unsaturated monomer containing the polyalkylene glycol group satisfies the above range, the inductiveness of lithium ions of the second binder is excellent, thereby further improving lithium ion conductivity. Accordingly, internal resistance of the protective layer 23 including the second binder may be reduced.

According to an embodiment, the ethylene-based unsaturated monomer including a fluorine group may be represented by Formula 4.

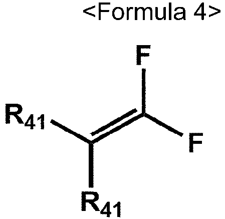

In Formula 4,
R₄₁ and R₄₂ are each independently hydrogen; a C1-C10 alkyl group unsubstituted or substituted with halogen; a C6-C20 aryl group unsubstituted or substituted with halogen; or a C2-C20 heteroaryl group unsubstituted or substituted with halogen.

According to an embodiment, in Formula 4, R₄₁ and R₄₂ may each independently be hydrogen or a C1-C10 alkyl group unsubstituted or substituted with halogen. For example, in Formula 4, R₄₁ and R₄₂ may each independently be hydrogen, a methyl group, or an ethyl group.

According to an embodiment, the ethylene-based unsaturated monomer including a fluorine group may include vinylidene difluoride.

According to an embodiment, the ethylene-based unsaturated monomer including an ammonium group may be represented by Formula 5.

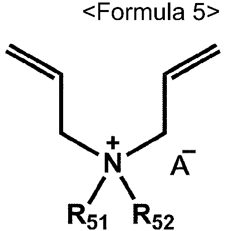

In Formula 5,
R₅₁ and R₅₂ may each independently be hydrogen; a C1-C10 alkyl group unsubstituted or substituted with halogen; a C6-C20 aryl group unsubstituted or substituted with halogen; or a C2-C20 heteroaryl group unsubstituted or substituted with halogen, and
A may be F⁻, Cl⁻, Br⁻, I⁻, N(CF₃SO₂)₂⁻, bis(oxalate)borate, or dicyanamide.

According to an embodiment, in Formula 5, R₅₁ and R₅₂ may each independently be hydrogen or a C1-C10 alkyl group unsubstituted or substituted with halogen. For example, in Formula 5, R51 and R52 may each independently be a methyl group or an ethyl group.

According to an embodiment, the ethylene-based unsaturated monomer including an ammonium group may include diallyldimethylammonium bis(trifluoromethanesulfonyl)imide or diallyldiethylammonium bis(trifluoromethanesulfonyl)imide.

According to an embodiment, the second binder may include a repeating unit (A) derived from an ethylene-based unsaturated monomer including a carboxyl group; a repeating unit (B) derived from an ethylene-based unsaturated monomer including a nitrile group; and a repeating unit (C) derived from an ethylene-based unsaturated monomer including a polyalkylene glycol group.

According to an embodiment, the second binder may include a repeating unit (D) derived from an ethylene-based unsaturated monomer including a fluorine group.

According to an embodiment, the second binder may include a repeating unit (E) derived from an ethylene-based unsaturated monomer including an ammonium group.

According to an embodiment, the second binder may include PVdF, PVdF-HFP, PDD-TFSI, lithium polyacrylic acid (LiPAA), polyacrylic acid (PAA), polyacrylonitrile (PAN), PEG methacrylate (PEGMA), or any combination thereof.

According to an embodiment, when the second binder includes a repeating unit (A) derived from an ethylene-based unsaturated monomer including a carboxyl group; a repeating unit (B) derived from an ethylene-based unsaturated monomer including a nitrile group; and a repeating unit (C) derived from an ethylene-based unsaturated monomer including a polyalkylene glycol group, the second binder may include lithium polyacrylic acid-polyacrylonitrile-polyethylene glycol methacrylate (LiPAA-PAN-PEGMA) or polyacrylic acid-polyacrylonitrile-polyethylene glycol methacrylate (PAA-PAN-PEGMA).

According to an embodiment, based on a total weight of the binder, a content of the repeating unit (A) may be 25 to 60 wt%, a content of the repeating unit (B) may be 5 to 50 wt%, and a content of the repeating unit (C) may be 5 to 50 wt%.

According to an embodiment, based on the total weight of the binder, the content of the repeating unit (A) may be 25 to 50 wt%, 25 to 45 wt%, 30 to 50 wt%, or 30 to 45 wt%.

According to an embodiment, based on the total weight of the binder, the content of the repeating unit (B) may be 5 to 50 wt%, 15 to 50 wt%, 25 to 50 wt%, or 25 to 40 wt%.

According to an embodiment, based on the total weight of the binder, the content of the repeating unit (C) may be 5 to 50 wt%, 15 to 50 wt%, 30 to 50 wt%, or 30 to 45 wt%.

According to an embodiment, when the second binder includes the repeating unit (D) derived from an ethylene-based unsaturated monomer including a fluorine group, the second binder may be, for example, polyvinylidene fluoride (PVDF), polytetrafluoroethylene (PTFE), or polyvinylidene fluoride-hexafluoropropylene copolymer (PVDF-HFP).

According to an embodiment, when the second binder includes the repeating unit (E) derived from an ethylene-based unsaturated monomer including an ammonium group, the second binder may be, for example, polydiallyldimethylammonium bis(trifluoromethanesulfonyl)imide or polydiallyldiethylammonium bis(trifluoromethanesulfonyl)imide.

According to an embodiment, the protective layer 23 may further include an inorganic oxide. For example, the inorganic oxide may include aluminum oxide (Al₂O₃).

According to an embodiment, the second binder may be a random copolymer or a block copolymer. For example, the second binder may be a random copolymer.

A weight average molecular weight of the second binder may be 10,000 to 2,000,000 g/mol. For example, the weight average molecular weight of the binder may be 50,000 to 1,000,000 g/mol. For example, the weight average molecular weight of the binder may be 100,000 to 1,000,000 g/mol.

According to an embodiment, the protective layer 23 may further include a binder other than the second binder, similarly to the electrodeposition induction layer 22.

According to an embodiment, a thickness of the protective layer 23 may be, for example, 1 µm to 50 µm, 1 µm to 20 µm, or 1 µm to 10 µm. If the thickness of the protective layer 23 is excessively small, it may be difficult to perform the function of the protective layer 23. If the thickness of the protective layer 23 is excessively large, internal resistance increases and energy density of the lithium battery may decrease.

### [Negative electrode: Lithium Electrodeposition Layer]

Referring to FIG. 2, after charging, the negative electrode 20 includes a negative electrode current collector 21; an electrodeposition induction layer 22 arranged on the negative electrode current collector 21; a protective layer 23 arranged on the electrode position induction layer 22; and a lithium electrodeposition layer 24 arranged between the electrodeposition induction layer 22 and the protective layer 23, and the lithium electrodeposition layer 24 includes lithium metal or a lithium alloy.

The lithium electrodeposition layer 24 may include the lithium electrodeposition layer 24 by lithium metal being plated on the electrodeposition induction layer 22 by charging after the negative electrode 20 is introduced into a lithium battery together with a positive electrode and an electrolyte. The lithium electrodeposition layer 24 may include, for example, lithium metal or a lithium alloy.

For example, the lithium alloy is an alloy of lithium and another metal alloyable with lithium, and may be, for example, a lithium-silver alloy, a lithium-zinc alloy, a lithium-magnesium alloy, a lithium-tin alloy, or the like.

According to an embodiment, the lithium electrodeposition layer 24 may include spherical lithium metal or a spherical lithium alloy. For example, as the lithium electrodeposition layer 24 is formed between the electrodeposition induction layer 22 including the first carbon-based material including nitrogen atoms and the protective layer 23, electrodeposition of lithium ions is induced by the nitrogen atoms, and lithium ions may be uniformly electrodeposited by the protective layer 23. Accordingly, spherical lithium metal or a lithium alloy may be uniformly electrodeposited between the electrode position induction layer 22 and the protective layer 23. Accordingly, the lithium electrodeposition layer 24 may include spherical lithium metal or a lithium alloy.

According to an embodiment, an average particle diameter (D50) of the lithium metal or lithium alloy of the embodiment may be 0.1 to 15 µm, 0.1 to 12 µm, 0.1 to 10 µm, 1 to 15 µm, 2 to 15 µm, 3 to 15 µm, or 3 to 10 µm.

A thickness of the lithium electrodeposition layer 24 may be, for example, 50 µm or less, 40 µm or less, 35 µm or less, 30 µm or less, 28 µm or less, 1 µm to 50 µm, 1 µm to 40 µm, 5 µm to 40 µm, 7 µm to 35 µm, 7 µm to 30 µm, or 7 µm to 28 µm. For example, when the lithium electrodeposition layer 24 has a thickness within this range, energy density of the lithium battery may be further improved.

According to an embodiment, at maximum charge, the thickness of the lithium electrodeposition layer 24 may be 35 µm or less, 30 µm or less, 28 µm or less, 5 to 35 µm, 5 to 30 µm, or 5 to 28 µm. According to an embodiment, a density of the lithium electrodeposition layer 24 may be 0.4 g/cc to 0.5 g/cc or 0.43 g/cc to 0.5 g/cc.

### [Negative electrode: Anode interlayer]

Referring to FIG. 1 and FIG. 2, the negative electrode 20 may optionally further include an anode interlayer (not illustrated) arranged between the negative electrode current collector 21 and the electrodeposition induction layer 22. As the negative electrode 20 further includes the anode interlayer, generation and/or growth of lithium dendrites in the negative electrode 20 may be more effectively suppressed. The anode interlayer may be omitted.

The anode interlayer may include, for example, a negative electrode active material and a binder. The negative electrode active material is a negative electrode material that may be lithiated and delithiated. The negative electrode active material included in the anode interlayer may have, for example, a particle form. An average particle diameter of the negative electrode active material having a particle form may be, for example, 10 nm to 4 µm, 10 nm to 1 µm, 10 nm to 500 nm, 10 nm to 100 nm, or 20 nm to 80 nm. As the negative electrode active material has an average particle diameter within this range, reversible plating and/or dissolution of lithium during charge/discharge may be facilitated. The average particle diameter of the negative electrode active material is, for example, a median diameter (D50) measured using a laser diffraction particle size analyzer.

The negative electrode active material included in the anode interlayer may include, for example, one or more selected from among a carbon-based negative electrode active material and a metal or metalloid negative electrode active material. The carbon-based negative electrode active material may be, for example, amorphous carbon. The carbon-based negative electrode active material may include, for example, carbon black (CB), acetylene black (AB), furnace black (FB), ketjen black (KB), graphene, or the like, but is not limited thereto, and any material classified as amorphous carbon in the art may be used. Amorphous carbon is carbon having no crystallinity or very low crystallinity and is distinguished from crystalline carbon or graphite-based carbon. The metal or metalloid negative electrode active material may include one or more selected from the group consisting of gold (Au), platinum (Pt), palladium (Pd), silicon (Si), silver (Ag), aluminum (Al), bismuth (Bi), tin (Sn), and zinc (Zn), but is not limited thereto, and any material used as a metal negative electrode active material or metalloid negative electrode active material forming an alloy or compound with lithium in the art may be used. For example, nickel (Ni) does not form an alloy with lithium and thus is not a metal negative electrode active material in the present application. The anode interlayer may include one type of negative electrode active material among these negative electrode active materials, or may include a mixture of a plurality of different negative electrode active materials. The anode interlayer may include, for example, a mixture of amorphous carbon and one or more selected from the group consisting of gold (Au), platinum (Pt), palladium (Pd), silicon (Si), silver (Ag), aluminum (Al), bismuth (Bi), tin (Sn), and zinc (Zn). A mixing ratio of the mixture may be, for example, 10:1 to 1:2, 10:1 to 1:1, 7:1 to 1:1, 5:1 to 1:1, or 4:1 to 2:1 by weight ratio. The negative electrode active material included in the anode interlayer may include, for example, a mixture of first particles consisting of amorphous carbon and second particles consisting of a metal or metalloid. The metal may include, for example, gold (Au), platinum (Pt), palladium (Pd), silicon (Si), silver (Ag), aluminum (Al), bismuth (Bi), tin (Sn), zinc (Zn), and the like. A content of the second particles may be 8 to 60 wt%, 10 to 50 wt%, 15 to 40 wt%, or 20 to 30 wt% based on a total weight of the mixture. When the second particles have a content within this range, cycle characteristics of, for example, the lithium battery may be further improved.

The binder included in the anode interlayer may include, for example, styrene-butadiene rubber (SBR), polytetrafluoroethylene, polyvinylidene fluoride, polyethylene, vinylidene fluoride/hexafluoropropylene copolymer, polyacrylonitrile, polymethyl methacrylate, or the like, but is not limited thereto, and any material used as a binder in the art may be used. The binder may consist of a single or a plurality of different binders. When the anode interlayer does not include a binder, the anode interlayer may be easily separated from the negative electrode current collector 21. A content of the binder included in the anode interlayer may be, for example, 1 to 20 wt% based on a total weight of the anode interlayer.

A thickness of the anode interlayer may be, for example, 1 µm to 20 µm, 1 µm to 15 µm, 2 µm to 10 µm, or 3 µm to 7 µm. The thickness of the anode interlayer may be, for example, 1 % to 50 %, 1 % to 30 %, 1 % to 10 %, or 1 % to 5 % of a thickness of a positive electrode active material layer. If the thickness of the anode interlayer is excessively small, lithium dendrites formed between the anode interlayer and the negative electrode current collector may collapse the anode interlayer, making it difficult to improve cycle characteristics of the lithium battery. If the thickness of the anode interlayer is excessively large, energy density of a lithium battery employing the negative electrode 20 decreases and it may be difficult to improve cycle characteristics. As the thickness of the anode interlayer decreases, for example, a charge capacity of the anode interlayer also decreases. The charge capacity of the anode interlayer may be, for example, 0.1 % to 50 %, 1 % to 30 %, 1 % to 10 %, 1 % to 5 %, or 1 % to 2 % relative to the charge capacity. **If** the charge capacity of the anode interlayer is excessively small, lithium dendrites formed between the anode interlayer and the negative electrode current collector may collapse the anode interlayer, making it difficult to improve cycle characteristics of the lithium battery. If the charge capacity of the anode interlayer is excessively large, energy density of a lithium battery employing the negative electrode 20 decreases and it may be difficult to improve cycle characteristics. The charge capacity of the positive electrode active material layer is obtained by multiplying a charge capacity density (mAh/g) of a positive electrode active material by a mass of the positive electrode active material in the positive electrode active material layer. When a plurality of types of positive electrode active materials are used, a value of charge capacity density × mass is calculated for each positive electrode active material, and a sum of these values is the charge capacity of the positive electrode active material layer. The charge capacity of the anode interlayer is also calculated in the same manner. That is, the charge capacity of the anode interlayer is obtained by multiplying a charge capacity density (mAh/g) of the negative electrode active material by a mass of the negative electrode active material in the anode interlayer. When a plurality of types of negative electrode active materials are used, a value of charge capacity density × mass is calculated for each negative electrode active material, and a sum of these values is the capacity of the anode interlayer. Here, the charge capacity densities of the positive electrode active material and the negative electrode active material are capacities estimated using an all-solid-state half-cell using lithium metal as a counter electrode. Charge capacities of the positive electrode active material layer and the anode interlayer are directly measured by measuring charge capacity using the all-solid-state half-cell. When the measured charge capacity is divided by a mass of each active material, a charge capacity density is obtained. Alternatively, the charge capacities of the positive electrode active material layer and the anode interlayer may be initial charge capacities measured during a first cycle charging.

According to an embodiment, the anode interlayer described above may be absent between the electrodeposition induction layer 22 and the protective layer 23.

### [Lithium battery]

A lithium battery according to an embodiment includes a positive electrode; the aforementioned negative electrode; and an electrolyte arranged between the positive electrode and the negative electrode, for example, the negative electrode includes an electrode position induction layer including the aforementioned first carbon-based material. By including the aforementioned negative electrode, the lithium battery may simultaneously provide improved capacity and excellent lifespan characteristics. The lithium battery may be, for example, a lithium primary battery, a lithium secondary battery, a lithium-sulfur battery, a lithium-air battery, a lithium metal battery, a negative electrode-free lithium metal battery, but is not limited thereto, and any lithium battery used in the art may be used.

The lithium battery is manufactured, for example, by the following example method, but is not necessarily limited to this method and may be adjusted according to required conditions.

### (Negative electrode)

A negative electrode 20 including an electrodeposition induction layer 22 including the aforementioned first carbon-based material and a first binder; and a protective layer 23 including a second binder is prepared.

### (Positive electrode)

First, a positive electrode active material composition is prepared by mixing a positive electrode active material, a conductive agent, a binder, and a solvent. The prepared positive electrode active material composition is directly applied onto an aluminum current collector and dried to manufacture a positive electrode electrode plate on which a positive electrode active material layer is formed. Alternatively, the positive electrode active material composition is cast on a separate support, and then a film obtained by peeling from the support is laminated on the aluminum current collector to manufacture a positive electrode electrode plate on which a positive electrode active material layer is formed.

The positive electrode active material is a lithium-containing metal oxide, and any material commonly used in the art may be used without limitation. For example, one or more selected from composite oxides of lithium and a metal selected from cobalt, manganese, nickel, and combinations thereof may be used, and specific examples thereof may include compounds represented by any one of the formulae LiₐA_{1-b}B_{b}D₂ (wherein, 0.90 ≤ a ≤ 1, and 0 ≤ b ≤ 0.5); LiₐE_{1-b}B_{b}O_{2-c}D_{c} (wherein, 0.90 ≤ a ≤ 1, 0 ≤ b ≤ 0.5, 0 ≤ c ≤ 0.05); LiE_{2-b}B_{b}O_{4-c}D_{c} (wherein, 0 ≤ b ≤ 0.5, 0 ≤ c ≤ 0.05); LiₐNi_{1-b-c}Co_{b}B_{c}D_{α} (wherein, 0.90 ≤ a ≤ 1, 0 ≤ b ≤ 0.5, 0 ≤ c ≤ 0.05, 0 < α ≤ 2); LiₐNi_{1-b-c}Co_{b}B_{c}O_{2-α}F_{α} (wherein, 0.90 ≤ a ≤ 1, 0 ≤ b ≤ 0.5, 0 ≤ c ≤ 0.05, 0 < α < 2); LiₐNi_{1-b-c}Co_{b}B_{c}O_{2-α}F₂ (wherein, 0.90 ≤ a ≤ 1, 0 ≤ b ≤ 0.5, 0 ≤ c ≤ 0.05, 0 < α < 2); LiₐNi_{1-b-c}Mn_{b}B_{c}D_{α} (wherein, 0.90 ≤ a ≤ 1, 0 ≤ b ≤ 0.5, 0 ≤ c ≤ 0.05, 0 < α ≤ 2); LiₐNi_{1-b-c}Mn_{b}B_{c}O_{2-α}F_{α} (wherein, 0.90 ≤ a ≤ 1, 0 ≤ b ≤ 0.5, 0 ≤ c ≤ 0.05, 0 < α < 2); LiₐNi_{1-b-c}Mn_{b}B_{c}O_{2-α}F₂ (wherein, 0.90 ≤ a ≤ 1, 0 ≤ b ≤ 0.5, 0 ≤ c ≤ 0.05, 0 < α < 2); LiₐNi_{b}E_{c}G_{d}O₂ (wherein, 0.90 ≤ a ≤ 1, 0 ≤ b ≤ 0.9, 0 ≤ c ≤ 0.5, 0.001 ≤ d ≤ 0.1); LiₐNi_{b}Co_{c}Mn_{d}GeO₂ (wherein, 0.90 ≤ a ≤ 1, 0 ≤ b ≤ 0.9, 0 ≤ c ≤ 0.5, 0 ≤ d ≤ 0.5, 0.001 ≤ e ≤ 0.1); LiₐNiG_{b}O₂ (wherein, 0.90 ≤ a ≤ 1, 0.001 ≤ b ≤ 0.1); LiₐCoG_{b}O₂ (wherein, 0.90 ≤ a ≤ 1, 0.001 ≤ b ≤ 0.1); LiₐMnG_{b}O₂ (wherein, 0.90 ≤ a ≤ 1, 0.001 ≤ b ≤ 0.1); LiₐMn₂G_{b}O₄ (wherein, 0.90 ≤ a ≤ 1, 0.001 ≤ b ≤ 0.1); QO₂; QS₂; LiQS₂; V₂O₅; LiV₂O₃; LiIO₂; LiNiVO₄; Li_{(3-f)}J₂(PO₄)₃ (0 ≤ f ≤ 2); Li_{(3-f)}Fe₂(PO₄)₃ (0 ≤ f ≤ 2); or LiFePO₄.

In the Formulae representing the aforementioned compounds, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof. A compound in which a coating layer is added on the surface of the aforementioned compound may also be used, and a mixture of the aforementioned compound and a compound having a coating layer added thereto may also be used. The coating layer added on the surface of the aforementioned compound includes, for example, a coating element compound of an oxide of a coating element, a hydroxide, an oxyhydroxide of a coating element, an oxycarbonate of a coating element, or a hydroxycarbonate of a coating element. The compound forming such a coating layer is amorphous or crystalline. The coating element included in the coating layer are Mg, Al, Co, K, Na, Ca, Si, Ti, V, Sn, Ge, Ga, B, As, Zr, or a mixture thereof. The method of forming the coating layer is selected within a range that does not adversely affect the physical properties of the positive electrode active material. The coating method includes, for example, spray coating, immersion methods, and the like. Since specific coating methods are well understood by those skilled in the art, a detailed description thereof will be omitted.

The positive electrode active material is, for example, LiₐNiₓCo_{y}M_{z}O_{2-b}A_{b} (1.0 ≤ a ≤ 1.2, 0 ≤ b ≤ 0.2, 0.8 ≤ x < 1, 0 < y ≤ 0.3, 0 < z ≤ 0.3, and x + y + z = 1, and M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and A is F, S, Cl, Br, or a combination thereof), LiNiₓCo_{y}Mn_{z}O₂ (0.8 ≤ x ≤ 0.95, 0 ≤ y ≤ 0.2, 0 < z ≤ 0.2, and x + y + z = 1), LiNiₓCo_{y}Al_{z}O₂ (0.8 ≤ x ≤ 0.95, 0 ≤ y ≤ 0.2, 0 < z ≤ 0.2, and x + y + z = 1), LiNiₓCo_{y}Mn_{z}Al_{w}O₂ (0.8 ≤ x ≤ 0.95, 0 ≤ y ≤ 0.2, 0 < z ≤ 0.2, 0 < w ≤ 0.2, and x + y + z + w = 1), LiₐCoₓM_{y}O_{2-b}A_{b} (1.0 ≤ a ≤ 1.2, 0 ≤ b ≤ 0.2, 0.9 ≤ x ≤ 1, 0 ≤ y ≤ 0.1, and x + y = 1, and M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and A is F, S, Cl, Br, or a combination thereof), LiₐNiₓMn_{y}M'_{z}O_{2-b}A_{b} (1.0 ≤ a ≤ 1.2, 0 ≤ b ≤ 0.2, 0 < x ≤ 0.3, 0.5 ≤ y < 1, 0 < z ≤ 0.3, and x + y + z = 1, and M' is cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and A is F, S, Cl, Br, or a combination thereof), LiₐM1ₓM2_{y}PO_{4-b}X_{b} (in Formula 7, 0.90 ≤ a ≤ 1.1, 0 ≤ x ≤ 0.9, 0 ≤ y ≤ 0.5, 0.9 < x + y < 1.1, 0 ≤ b ≤ 2, M1 is chromium (Cr), manganese (Mn), iron (Fe), cobalt (Co), nickel (Ni), copper (Cu), zirconium (Zr), or a combination thereof, M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof, and X is O, F, S, P, or a combination thereof), or LiₐM3_{z}PO₄ (0.90 ≤ a ≤ 1.1, 0.9 ≤ z ≤ 1.1, and M3 is chromium (Cr), manganese (Mn), iron (Fe), cobalt (Co), nickel (Ni), copper (Cu), zirconium (Zr), or a combination thereof).

As the conductive agent, carbon black, graphite fine particles, natural graphite, artificial graphite, acetylene black, ketjen black, carbon fibers; carbon nanotubes; metal powders such as copper, nickel, aluminum, silver, or metal fibers or metal tubes; conductive polymers such as polyphenylene derivatives may be used, but are not limited thereto, and any material used as a conductive material in the art may be used. Alternatively, the positive electrode may not include a separate conductive material.

As the binder, vinylidene fluoride/hexafluoropropylene copolymer, polyvinylidene fluoride, polyacrylonitrile, polymethyl methacrylate, polytetrafluoroethylene (PTFE), mixtures of the above polymers, styrene-butadiene rubber-based polymers, and the like are used, and as the solvent, N-methylpyrrolidone (NMP), acetone, water, and the like are used, but are not necessarily limited thereto, and any material used in the art may be used.

A plasticizer or a pore-forming agent may be further added to the positive electrode active material composition to form pores inside the electrode plate.

The contents of the positive electrode active material, conductive agent, binder, and solvent used in the positive electrode are at levels commonly used in lithium batteries. Depending on the use and configuration of the lithium battery, one or more of the conductive material, binder, and solvent may be omitted.

The binder content included in the positive electrode may be 0.1 wt% to 10 wt% or 0.1 wt% to 5 wt% of the total weight of the positive electrode active material layer. The content of the positive electrode active material included in the positive electrode may be 80 wt% to 99 wt%, 90 wt% to 99 wt%, or 95 wt% to 99 wt% of the total weight of the positive electrode active material layer.

### (separator)

Next, a separator to be inserted between the positive electrode and the negative electrode is prepared.

The separator may be any separator commonly used in lithium batteries. The separator has, for example, low resistance to ion movement of the electrolyte and excellent electrolyte retention capacity. The separator is, for example, selected from glass fiber, polyester, Teflon, polyethylene, polypropylene, polytetrafluoroethylene (PTFE), or a combination thereof, and is in the form of a nonwoven fabric or a woven fabric. For lithium-ion batteries, for example, a windable separator such as polyethylene or polypropylene is used, and for lithium-ion polymer batteries, a separator having excellent organic electrolyte impregnation ability is used.

The separator is manufactured, for example, by the following example method, but is not necessarily limited to this method and may be adjusted according to required conditions.

First, a separator composition is prepared by mixing a polymer resin, a filler, and a solvent. The separator composition is directly applied onto the electrode and dried to form a separator. Alternatively, after the separator composition is cast on a support and dried, a separator film peeled from the support is laminated on the electrode to form a separator.

The polymer used in the manufacture of the separator is not particularly limited, and any polymer used as a binder of an electrode plate may be used. For example, vinylidene fluoride/hexafluoropropylene copolymer, polyvinylidene fluoride (PVDF), polyacrylonitrile, polymethyl methacrylate, or a mixture thereof is used.

### (electrolyte)

Next, an electrolyte is prepared.

The electrolyte may be, for example, a liquid electrolyte, a solid electrolyte, a gel electrolyte, or a combination thereof.

The electrolyte is, for example, an organic electrolyte. The organic electrolyte is prepared, for example, by dissolving a lithium salt in an organic solvent.

The organic solvent may be any organic solvent used in the art. The organic solvent includes, for example, propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, or a mixture thereof.

The lithium salt may be any lithium salt used in the art. The lithium salt is, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (1 ≤ x ≤ 20, 1 ≤ y ≤ 20), LiCl, Lil, or a mixture thereof. The concentration of the lithium salt is, for example, 0.1 M to 5.0 M.

The solid electrolyte is, for example, an oxide-based solid electrolyte, a sulfide-based solid electrolyte, a polymer solid electrolyte, or a combination thereof.

The solid electrolyte is, for example, an oxide-based solid electrolyte. The oxide-based solid electrolyte is one or more selected from Li_{1+x+y}AlₓTi₂₋ₓSi_{y}P_{3-y}O₁₂ (0 < x < 2, 0 ≤ y < 3), BaTiO₃, Pb(Zr,Ti)O₃ (PZT), Pb₁₋ₓLaₓZr_{1-y}TiyO3 (PLZT) (0 ≤ x < 1, 0 ≤ y < 1), Pb(Mg_{1/3}Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃ (0 < x < 2, 0 < y < 3), LiₓAl_{y}Ti_{z}(PO₄)₃ (0 < x < 2, 0 < y < 1, 0 < z < 3), Li_{1+x+y}(Al, Ga)ₓ(Ti, Ge)₂₋ₓSi_{y}P_{3-y}O₁₂ (0 ≤ x ≤ 1, 0 ≤ y ≤ 1), LiₓLa_{y}TiO₃ (0 < x < 2, 0 < y < 3), Li₂O, LiOH, Li₂CO₃, LiAlO₂, Li₂O-Al₂O₃-SiO₂-P₂O₅-TiO₂-GeO₂, or Li₃₊ₓLa₃M₂O₁₂ (M = Te, Nb, or Zr, x is an integer of 1 to 10). The solid electrolyte is manufactured by a sintering method and the like. For example, the oxide-based solid electrolyte is a garnet-type solid electrolyte selected from Li₇La₃Zr₂O₁₂ (LLZO) and Li₃₊ₓLa₃Zr₂₋ₐMₐO₁₂ (M-doped LLZO, M = Ga, W, Nb, Ta, or Al, and x is an integer of 1 to 10).

The sulfide-based solid electrolyte may include, for example, lithium sulfide, silicon sulfide, phosphorus sulfide, boron sulfide, or a combination thereof. The sulfide-based solid electrolyte particles may include Li₂S, P₂S₅, SiS₂, GeS₂, B₂S₃, or a combination thereof. The sulfide-based solid electrolyte particles may be Li₂S or P₂S₅. The sulfide-based solid electrolyte particles are known to have high lithium ion conductivity compared to other inorganic compounds. For example, the sulfide-based solid electrolyte includes Li₂S and P₂S₅. When the sulfide solid electrolyte material constituting the sulfide-based solid electrolyte includes Li₂S-P₂S₅, a mixing molar ratio of Li₂S to P₂S₅ may be, for example, about 50:50 to about 90:10. In addition, an inorganic solid electrolyte prepared by adding Li₃PO₄, a halogen, a halogen compound, Li₂₊₂ₓZn₁₋ₓGeO₄ ("LISICON", 0≤x<1), Li_{3+y}PO₄₋ₓNₓ ("LIPON", 0<x<4, 0<y<3), Li_{3.25}Ge_{0.25}P_{0.75}S₄ ("ThioLISICON"), Li₂O-Al₂O₃-TiO₂-P₂O₅ ("LATP"), or the like to an inorganic solid electrolyte of Li₂S-P₂S₅, SiS₂, GeS₂, B₂S₃, or a combination thereof may be used as the sulfide solid electrolyte. Non-limiting examples of the sulfide solid electrolyte material include Li₂S-P₂S₅; Li₂S-P₂S₅-LiX (X = a halogen element); Li₂S-P₂S₅-Li₂O; Li₂S-P₂S₅-Li₂O-LiI; Li₂S-SiS₂; Li₂S-SiS₂-LiI; Li₂S-SiS₂-LiBr; Li₂S-SiS₂-LiCl; Li₂S-SiS₂-B₂S₃-LiI; Li₂S-SiS₂-P₂S₅-LiI; Li₂S-B₂S₃; Li₂S-P₂S₅-ZₘSₙ (0<m<10, 0<n<10, Z = Ge, Zn, or Ga); Li₂S-GeS₂; Li₂S-SiS₂-Li₃PO₄; and Li₂S-SiS₂-LiₚMO_{q} (0<p<10, 0<q<10, M = P, Si, Ge, B, Al, Ga, or In). In this regard, the sulfide-based solid electrolyte material may be prepared by processing raw starting materials (for example, Li₂S, P₂S₅, etc.) of the sulfide-based solid electrolyte material by a melt quenching method, a mechanical milling method, or the like. In addition, a calcination process may be further performed after the processing. The sulfide-based solid electrolyte may be amorphous, crystalline, or a mixture thereof.

The polymer solid electrolyte is, for example, an electrolyte including a mixture of a lithium salt and a polymer, or including a polymer having an ion-conductive functional group. The polymer solid electrolyte is, for example, a polymer electrolyte that does not include a liquid electrolyte. The polymer included in the polymer solid electrolyte may include, for example, polyethylene oxide (PEO), polyvinylidene fluoride (PVDF), poly(vinylidene fluoride-hexafluoropropylene) (PVDF-HFP), poly(styrene-b-ethylene oxide) block copolymer (PS-PEO), poly(styrene-butadiene), poly(styrene-isoprene-styrene), poly(styrene-b-divinylbenzene) block copolymer, poly(styrene-ethylene oxide-styrene) block copolymer, polystyrene sulfonate (PSS), polyvinyl fluoride (PVF), polymethyl methacrylate (PMMA), polyethylene glycol (PEG), polyacrylonitrile (PAN), polytetrafluoroethylene (PTFE), polyethylenedioxythiophene (PEDOT), polypyrrole (PPY), polyaniline, polyacetylene, Nafion, Aquivion, Flemion, Gore, Aciplex, Morgane ADP, sulfonated poly(ether ether ketone) (SPEEK), sulfonated poly(arylene ether ketone ketone sulfone) (SPAEKKS), sulfonated poly(aryl ether ketone) (SPAEK), poly[bis(benzimidazobenzisoquinolinones)] (SPBIBI), polystyrene sulfonate (PSS), lithium 9,10-diphenylanthracene-2-sulfonate (DPASLi+), or a combination thereof, but is not limited thereto, and any polymer used as a polymer electrolyte in the art may be used. The lithium salt is not particularly limited as long as it may be used as a lithium salt in the art. For example, the lithium salt is LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (x and y are each independently 1 to 20), LiCl, Lil, or a mixture thereof.

The gel electrolyte is, for example, a gel polymer electrolyte. The gel polymer electrolyte is, for example, an electrolyte including a liquid electrolyte and a polymer, or including an organic solvent and a polymer having an ion-conductive functional group. The liquid electrolyte may be, for example, an ionic liquid, a mixture of a lithium salt and an organic solvent, a mixture of an ionic liquid and an organic solvent, or a mixture of a lithium salt, an ionic liquid, and an organic solvent. The polymer may be selected from among polymers used in the polymer solid electrolyte. The organic solvent may be selected from among organic solvents used in the liquid electrolyte. The lithium salt may be selected from among lithium salts used in the polymer solid electrolyte. The ionic liquid refers to a salt in a liquid state at room temperature composed only of ions and having a melting point equal to or lower than room temperature, or a room temperature molten salt. The ionic liquid may include, for example, one or more cation selected from a) ammonium-based, pyrrolidinium-based, pyridinium-based, pyrimidinium-based, imidazolium-based, piperidinium-based, pyrazolium-based, oxazolium-based, pyridazinium-based, phosphonium-based, sulfonium-based, triazolium-based, and a mixture thereof, and b) one or more anions selected from BF4-, PF6-, AsF6-, SbF6-, AlCl4-, HSO4-, ClO4-, CH3SO3-, CF₃CO₂-, Cl-, Br-, I-, SO4-, CF3SO3-, (FSO2)2N-, (C2F5SO2)2N-, (C2F5SO2)(CF3SO2)N-, and (CF3SO2)2N-. The polymer solid electrolyte may form a gel polymer electrolyte by being impregnated with an electrolyte solution in the lithium battery. The gel electrolyte may further include inorganic particles.

### (lithium battery)

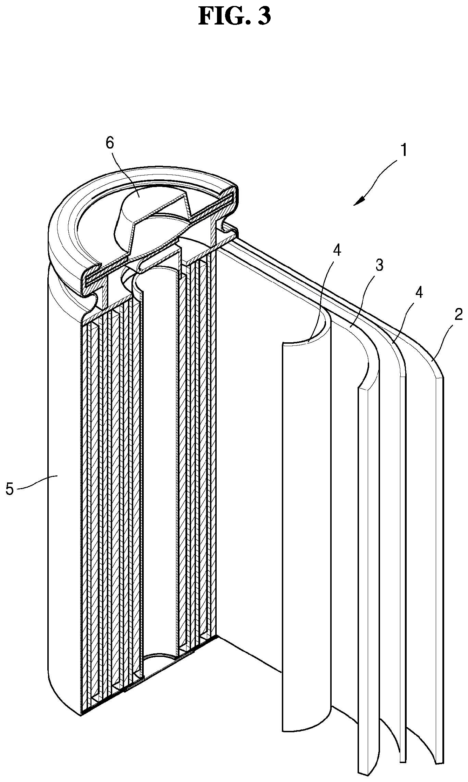

Referring to FIG. 3, a lithium battery 1 according to an embodiment includes a positive electrode 3, the aforementioned negative electrode 2, and a separator 4. The positive electrode 3, the negative electrode 2, and the separator 4 are wound or folded to form a battery structure 7. The formed battery structure 7 is accommodated in a battery case 5. An organic electrolyte solution is injected into the battery case 5 and sealed with a cap assembly 6 to complete the lithium battery 1. The battery case 5 is cylindrical, but is not necessarily limited to such a shape, and may be, for example, a prismatic shape, thin-film shape, or the like.

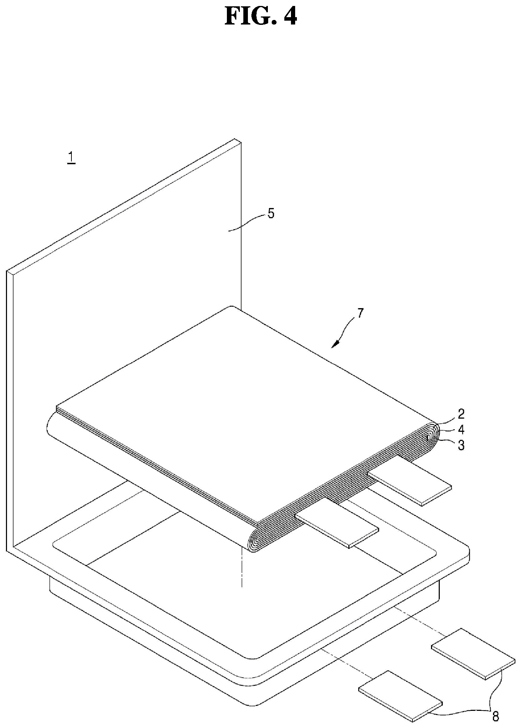

Referring to FIG. 4, a lithium battery 1 according to an embodiment includes a positive electrode 3, the aforementioned negative electrode 2, and a separator 4. The separator 4 is arranged between the positive electrode 3 and the negative electrode 2, and the positive electrode 3, the negative electrode 2, and the separator 4 are wound or folded to form a battery structure 7. The formed battery structure 7 is accommodated in a battery case 5. An electrode tab 8 serving as an electrical path for leading current generated in the battery structure 7 to the outside may be included. An organic electrolyte solution is injected into the battery case 5 and sealed to complete the lithium battery 1. The battery case 5 is prismatic, but is not necessarily limited to such a shape, and may be, for example, a cylindrical shape, thin-film shape, or the like.

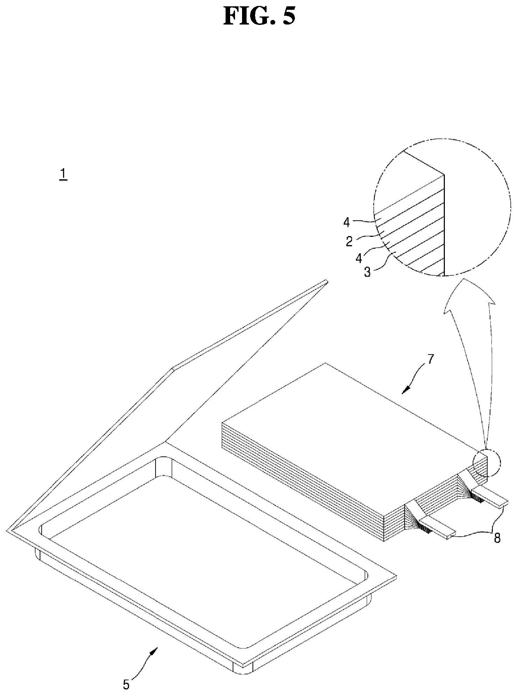

Referring to FIG. 5, a lithium battery 1 according to an embodiment includes a positive electrode 3, the aforementioned negative electrode 2, and a separator 4. The separator 4 is arranged between the positive electrode 3 and the negative electrode 2 to form a battery structure. The battery structure 7 is stacked in a bicell structure and then accommodated in a battery case 5. An electrode tab 8 serving as an electrical path for leading current generated in the battery structure 7 to the outside may be included. An organic electrolyte solution is injected into the battery case 5 and sealed to complete the lithium battery 1. The battery case 5 is prismatic, but is not necessarily limited to such a shape, and may be, for example, a cylindrical shape, thin-film shape, or the like.

A pouch-type lithium metal battery corresponds to each of the lithium batteries of FIGS. 3 to 5 in which a pouch is used as the battery case. The pouch-type lithium battery includes one or more battery structures. A separator is arranged between a positive electrode and a negative electrode to form a battery structure. The battery structures are stacked in a bicell structure, impregnated with an organic electrolyte solution, and accommodated and sealed in a pouch to complete the pouch-type lithium battery. For example, although not illustrated in the drawings, the aforementioned positive electrode, negative electrode, and separator are simply stacked and accommodated in a pouch in the form of an electrode assembly, or are wound or folded into a jelly-roll type electrode assembly and then accommodated in a pouch. Thereafter, an organic electrolyte solution is injected into the pouch and sealed to complete the lithium battery.

The lithium battery of the present disclosure has excellent discharge capacity and lifespan characteristics and has a high energy density, and thus is used, for example, in an electric vehicle (EV). For example, it is used in hybrid vehicles such as a plug-in hybrid electric vehicle (PHEV). In addition, it is used in fields requiring large amounts of power storage. For example, it is used in an electric bicycle, a power tool, and the like.

A plurality of lithium batteries are stacked to form a battery module, and a plurality of battery modules form a battery pack. Such a battery pack may be used in all devices requiring high-capacity and high output. For example, it may be used in a laptop computer, a smartphone, an electric vehicle, and the like. The battery module includes, for example, a plurality of batteries and a frame for supporting the same. The battery pack includes, for example, a plurality of battery modules and a bus bar connecting the same. The battery module and/or the battery pack may further include a cooling device. The plurality of battery packs are controlled by a battery management system. The battery management system includes a battery pack and a battery control device connected to the battery pack.

Hereinafter, a lithium battery including a solid electrolyte will be described in more detail.

### (All-solid-state lithium battery)

The lithium battery may be, for example, an all-solid-state lithium battery including a solid electrolyte. By including the aforementioned negative electrode, the all-solid-state lithium battery may simultaneously provide improved capacity and excellent lifespan characteristics.

The all-solid-state lithium battery is, for example, manufactured by the following example method, but is not necessarily limited to this method and may be adjusted according to required conditions.

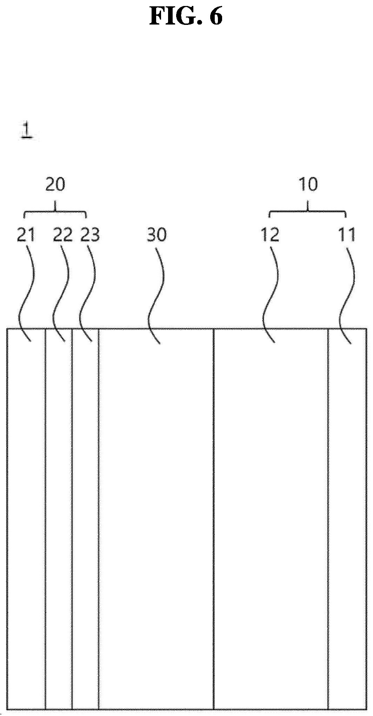

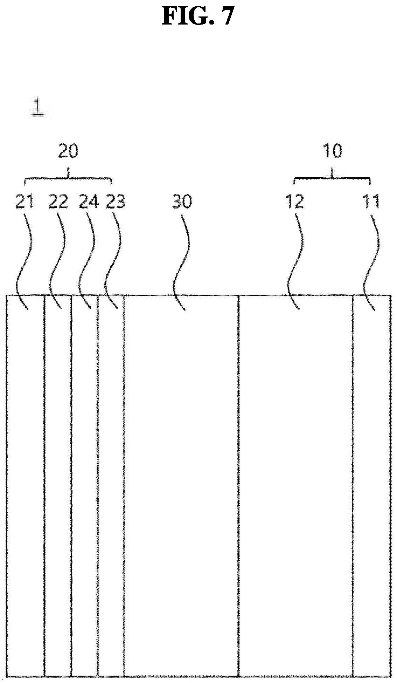

Referring to FIG. 6 and FIG. 7, an all-solid-state lithium battery 1 includes a positive electrode 10; the aforementioned negative electrode 20; and a solid electrolyte layer 30 arranged between the positive electrode 10 and the negative electrode 20. The solid electrolyte layer 30 includes, for example, an inorganic solid electrolyte. The solid electrolyte layer 30 includes, for example, a sulfide-based solid electrolyte or an oxide-based solid electrolyte.

### (Negative electrode)

The aforementioned negative electrode is prepared.

### (Positive electrode)

Referring to FIG. 6 and FIG. 7, the positive electrode 10 includes a positive electrode current collector 11 and a positive electrode active material layer 12 arranged on the positive electrode current collector. The positive electrode active material layer 12 includes a positive electrode active material. The positive electrode active material refers to the aforementioned lithium battery section.

The positive electrode active material layer 12 may further include a solid electrolyte in addition to the positive electrode active material. The solid electrolyte included in the positive electrode 10 may be the same as or different from the solid electrolyte included in the solid electrolyte layer 30. Details of the solid electrolyte included in the positive electrode 10 refer to the solid electrolyte layer 30 section. The solid electrolyte used in the positive electrode active material layer 12 may have a smaller D50 average particle diameter than the solid electrolyte used in the solid electrolyte layer 30. For example, the D50 average particle diameter of the solid electrolyte used in the positive electrode active material layer 12 may be 90 % or less, 80 % or less, 70 % or less, 60 % or less, 50 % or less, 40 % or less, 30 % or less, or 20 % or less of the D50 average particle diameter of the solid electrolyte used in the solid electrolyte layer 30. The D50 average particle diameter of the solid electrolyte used in the positive electrode active material layer 12 may be, for example, 0.1 µm to 2 µm, 0.2 µm to 1.5 µm, or 0.3 µm to 1.0 µm. The content of the solid electrolyte included in the positive electrode active material layer 12 may be 1 to 15 wt%, 5 to 15 wt%, or 8.0 to 12.0 wt% of the total weight of the positive electrode active material layer 12.

The positive electrode active material layer 12 may include a binder. The binder may be, for example, styrene butadiene rubber (SBR), polytetrafluoroethylene, polyvinylidene fluoride, polyethylene, but is not necessarily limited thereto and any material usable as a binder in the art may be used. The content of the binder included in the positive electrode active material layer 12 may be, for example, 0.1 to 5 wt%, 0.5 to 3 wt%, or 1.0 to 2.0 wt% of the total weight of the positive electrode active material layer 12.

The positive electrode active material layer 12 may include a conductive material. The conductive material may be, for example, a carbon-based conductive material or a metal-based conductive material. The conductive material may be, for example, graphite, carbon black, acetylene black, ketjen black, carbon fiber, carbon tube, metal powder, but is not necessarily limited thereto and any material usable as a conductive material in the art may be used. The content of the conductive material included in the positive electrode active material layer 12 may be, for example, 0.1 to 10 wt%, 0.5 to 5 wt%, or 1.0 to 4.0 wt% of the total weight of the positive electrode active material layer 12. The positive electrode active material layer 12 may further include additives such as, for example, a filler, a coating agent, a dispersant, or an ion-conductive auxiliary agent, in addition to the aforementioned positive electrode active material, solid electrolyte, binder, and conductive material.

The positive electrode current collector 11 may be, for example, a plate or foil consisting of aluminum (Al), indium (In), copper (Cu), magnesium (Mg), stainless steel, titanium (Ti), iron (Fe), cobalt (Co), nickel (Ni), zinc (Zn), germanium (Ge), lithium (Li), or an alloy thereof. The positive electrode current collector 11 may be omitted. The positive electrode current collector 11 may further include a carbon layer arranged on one surface or both surfaces of a metal substrate. By additionally arranging the carbon layer on the metal substrate, corrosion of the metal of the metal substrate by the solid electrolyte included in the positive electrode layer may be prevented and interfacial resistance between the positive electrode active material layer 12 and the positive electrode current collector 11 may be reduced. The thickness of the carbon layer may be, for example, 1 µm to 5 µm, 1 µm to 4 µm, or 1 µm to 3 µm. If the thickness of the carbon layer is excessively thin, it may be difficult to completely block contact between the metal substrate and the solid electrolyte. If the thickness of the carbon layer is excessively thick, the energy density of the all-solid-state secondary battery may be reduced. The carbon layer may include amorphous carbon, crystalline carbon, or the like. The thickness of the positive electrode current collector 11 including the metal substrate and optionally the carbon layer may be, for example, 10 µm to 50 µm, 10 µm to 40 µm, or 10 µm to 30 µm, but is not necessarily limited thereto and may be selected according to required characteristics of the all-solid-state lithium battery.

Although not illustrated in the drawings, the positive electrode 10 may further include an inactive member arranged on one side surface of the positive electrode active material layer, in addition to the positive electrode current collector 11 and the positive electrode active material layer 12 arranged on the positive electrode current collector. The area of the positive electrode active material layer 12 may be smaller than the area of the solid electrolyte layer 30 in contact with the positive electrode active material layer 12. The inactive member may be arranged to surround a side surface of the positive electrode active material layer 12 to compensate for an area error between the positive electrode active material layer 12 and the solid electrolyte layer 30. The inactive member is a member that does not include an electrochemically active material, for example, an electrode active material. The electrode active material is a material that intercalates/deintercalates lithium. The inactive member is a member consisting of a material other than the electrode active material and usable in the art. The inactive member may be arranged to surround the side surface of the positive electrode active material layer 12 and may contact the solid electrolyte layer 30. By the inactive member surrounding the side surface of the positive electrode active material layer 12 and contacting the solid electrolyte layer 30, cracking of the solid electrolyte layer 30 caused by a pressure difference during a press process in a portion of the solid electrolyte layer 30 not in contact with the positive electrode active material layer 12 may be effectively suppressed. By the area of the inactive member compensating for the difference between the area of the positive electrode active material layer 12 and the area of the solid electrolyte layer 30, cracking of the solid electrolyte layer 30 caused by a pressure difference during a press process may be effectively suppressed. The inactive member may be arranged between the positive electrode current collector 11 and the solid electrolyte layer 30 facing each other. The inactive member may serve as a filler that fills a space between the positive electrode current collector 11 and the solid electrolyte layer 30 facing each other. The inactive member may include one or more selected from a lithium ion insulator and a lithium ion conductor. The inactive member may be an electronic insulator. That is, the inactive member may not be an electronic conductor. The inactive member may be an organic material, an inorganic material, or an organic-inorganic composite material. The organic material may be, for example, a polymer. The inorganic material may be, for example, a ceramic such as a metal oxide. The organic-inorganic composite material may be a composite of a polymer and a metal oxide. The inactive member may include, for example, one or more selected from an insulating polymer, an ion-conductive polymer, an insulating inorganic material, an oxide-based solid electrolyte, and a sulfide-based solid electrolyte. The inactive member may be, for example, an olefin-based polymer such as polypropylene (PP) or polyethylene (PE). The inactive member may be, for example, a gasket. The thickness of the inactive member may be the same as or similar to the thickness of the positive electrode active material layer 12.

### (Solid electrolyte layer)

Referring to FIGS. 6 to 7, the solid electrolyte layer 30 is arranged between the positive electrode 10 and the negative electrode 20 and includes, for example, a sulfide-based solid electrolyte.

The sulfide-based solid electrolyte may include, for example, one or more selected from Li₂S-P₂S₅, Li₂S-P₂S₅-LiX, wherein X is a halogen element, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl Li₂S-SiS₂-B₂S₃-LiI, Li₂S-SiS₂-P₂S₅-LiI, Li₂S-B₂S₃, Li₂S-P₂S₅-ZₘSₙ, wherein m and n are positive numbers and Z is one of Ge, Zn, or Ga, Li₂S-GeS₂, Li₂S-SiS₂-Li₃PO₄, Li₂S-SiS₂-LiₚMO_{q}, wherein p and q are positive numbers and M is one of P, Si, Ge, B, Al, or Ga In, Li₇₋ₓPS₆₋ₓClₓ (0 ≤ x ≤ 2), Li₇₋ₓPS₆₋ₓBrₓ (0 ≤ x ≤ 2), and Li₇₋ₓPS₆₋ₓIₓ (0 ≤ x ≤ 2). The sulfide-based solid electrolyte is prepared, for example, by processing starting raw materials such as Li₂S and P₂S₅ by a melt rapid cooling method, a mechanical milling method, or the like. In addition, heat treatment may be carried out after such processing. The solid electrolyte may be amorphous, crystalline, or a mixture thereof. In addition, the solid electrolyte may include, for example, at least sulfur (S), phosphorus (P), and lithium (Li) as constituent elements among the aforementioned sulfide-based solid electrolyte materials. For example, the solid electrolyte may be a material including Li₂S-P₂S₅. When Li₂S-P₂S₅ is used as the sulfide-based solid electrolyte material forming the solid electrolyte, the mixing molar ratio of Li₂S to P₂S₅ may be, for example, in a range of 50 : 50 to 90 : 10.

The sulfide-based solid electrolyte may include, for example, an argyrodite-type solid electrolyte represented by Formula 6 below:

<Formula 6> Li⁺₁₂₋ₙ₋ₓAⁿ⁺X²⁻₆₋ₓY⁻ₓ

In the above formula, A is P, As, Ge, Ga, Sb, Si, Sn, Al, In, Ti, V, Nb, or Ta, X is S, Se, or Te, Y is Cl, Br, I, F, CN, OCN, SCN, or N₃, 1 ≤ n ≤ 5, and 0 ≤ x ≤ 2. The sulfide-based solid electrolyte may be, for example, an argyrodite-type compound including one or more selected from Li₇₋ₓPS₆₋ₓClₓ (0 ≤ x ≤ 2), Li₇₋ₓPS₆₋ₓBrₓ (0 ≤ x ≤ 2), and Li₇₋ₓPS₆₋ₓIₓ (0 ≤ x ≤ 2). The sulfide-based solid electrolyte may be, for example, an argyrodite-type compound including one or more selected from Li₆PS₅Cl, Li₆PS₅Br, and Li₆PS₅I. The density of the argyrodite-type solid electrolyte may be 1.5 to 2.0 g/cc. When the argyrodite-type solid electrolyte has a density of 1.5 g/cc or more, internal resistance of the all-solid-state secondary battery is reduced and penetration of Li through the solid electrolyte layer may be effectively suppressed.

The elastic modulus, that is, Young's modulus, of the sulfide-based solid electrolyte may be, for example, 35 GPa or less, 30 GPa or less, 27 GPa or less, 25 GPa or less, or 23 GPa or less. The elastic modulus, that is, Young's modulus, of the sulfide-based solid electrolyte may be, for example, 10 to 35 GPa, 10 to 30 GPa, 10 to 27 GPa, 10 to 25 GPa, or 10 to 23 GPa. By the sulfide-based solid electrolyte having an elastic modulus within this range, a magnitude of temperature and/or pressure required for sintering or the like is reduced, and thus sintering of the solid electrolyte may be more easily performed.

The D50 average particle diameter of the solid electrolyte used in the solid electrolyte layer 30 may be, for example, 1 µm to 10 µm, 1.5 µm to 7 µm, or 2 µm to 5 µm.

The content of the sulfide-based solid electrolyte included in the solid electrolyte layer 30 may be, for example, 97 to 100 wt%, 98 to 99.9 wt%, or 98.5 to 99.0 wt% of the total weight of the solid electrolyte layer 30.

The solid electrolyte layer 30 may further include, for example, a binder. The binder included in the solid electrolyte layer 30 may be, for example, styrene butadiene rubber (SBR), polytetrafluoroethylene, polyvinylidene fluoride, polyethylene, and the like, but is not limited thereto and any binder usable in the art may be used. The binder of the solid electrolyte layer 30 may be the same as or different from the binder included in the positive electrode active material layer 12 and the electrode position induction layer 22.

The content of the binder included in the solid electrolyte layer 30 may be, for example, 0.1 to 3 wt%, 0.5 to 2 wt%, or 1.0 to 2.0 wt% of the total weight of the solid electrolyte layer 30.

Referring to FIG. 6 and FIG. 7, the all-solid-state lithium battery 1 includes the solid electrolyte layer 30, the positive electrode 10 arranged on one surface of the solid electrolyte layer 30, and the negative electrode 20 arranged on the other surface of the solid electrolyte layer 30. The positive electrode 10 includes the positive electrode active material layer 12 in contact with the solid electrolyte layer 30 and the positive electrode current collector 11 in contact with the positive electrode active material layer 12, and the negative electrode 20 includes the electrodeposition induction layer 22 in contact with the solid electrolyte layer 30 and the negative electrode current collector 21 in contact with the electrodeposition induction layer 22. The all-solid-state lithium battery 1 is, for example, completed as an all-solid-state lithium metal battery 1 by arranging the positive electrode active material layer 12 and the electrodeposition induction layer 22 on both surfaces of the solid electrolyte layer 30, respectively, and arranging the positive electrode current collector 11 and the negative electrode current collector 21 on the positive electrode active material layer 12 and the electrodeposition induction layer 22, respectively. Alternatively, the all-solid-state lithium metal battery 1 is completed by sequentially stacking the negative electrode active material layer 22, the solid electrolyte layer 30, the positive electrode active material layer 12, and the positive electrode current collector 11 on the negative electrode current collector 21.

The present inventive concept will be described in more detail through the following Examples and Comparative Examples. However, the Examples are for illustrating the present inventive concept and the scope of the present inventive concept is not limited thereto.

### Example 1: Cu substrate / electrodeposition induction layer including C-SPAN + denka black + water-based acrylic binder / protective layer containing PVdF-HFP

### (Preparation of first carbon-based material)

Sulfur powder and polyacrylonitrile powder were pulverized and mixed, and then heat-treated at 350 °C for 6 hours to prepare sulfurized polyacrylonitrile (SPAN) having an average particle diameter (D50) of 0.1 µm and exhibiting a dark brown color.

The sulfurized polyacrylonitrile was carbonized at 850 °C for 4 hours in a nitrogen atmosphere to prepare a black first carbon-based material (c-SPAN). The content of nitrogen atoms in the prepared first carbon-based material was 12 wt% based on the total weight of the first carbon-based material.

### (Preparation of negative electrode)

0.1 g of the prepared first carbon-based material, 0.9 g of denka black as a second carbon-based material, and 0.05 g of an acrylic binder as a water-based binder were prepared, and dry-mixed at 2,000 rpm for 5 minutes using a Thinky mixer to prepare a mixture. Water (D.I water) was added to the mixture to prepare a slurry. The slurry was applied onto a copper current collector using a doctor blade and dried in a vacuum oven at 80 °C to prepare a negative electrode. The negative electrode had a structure in which an electrodeposition induction layer having a thickness of 5 µm was applied onto the copper current collector. The content of nitrogen element included in the electrodeposition induction layer measured by XPS analysis was 1.2 wt% based on the total weight of the electrodeposition induction layer.

Thereafter, PVdF-HFP (weight average molecular weight 100,000 g/mol to 1,000,000 g/mol) as a binder was dissolved in an NMP solvent (8 % solution), applied onto the electrode position induction layer by a doctor blade method, and dried in a vacuum oven at 80 °C to form a protective layer having a thickness of 5 µm.

### (Preparation of positive electrode)

LiNi_{0.6}Co_{0.2}Al_{0.2}O₂, a conductive agent (Super-P; Timcal Ltd.), a binder (PVdF; Solvay), and N-methylpyrrolidone were mixed to obtain a positive electrode composition. In the positive electrode composition, a mixing weight ratio of LiNi_{0.6}Co_{0.2}Al_{0.2}O₂, the conductive agent, and the polymer electrolyte was 95:3:2.

The positive electrode composition was applied onto an aluminum foil (thickness: about 10 µm) and dried at 50 °C, and then the dried result was dried under vacuum at about 120 °C to prepare a positive electrode.

### (Preparation of coin cell)

A polypropylene separator (Celgard 3510) was disposed between the positive electrode and the negative electrode prepared above, and an electrolyte was injected to prepare a coin cell.

As the electrolyte, a solution in which 1.15 M LiPF₆ was dissolved in ethylene carbonate (EC) + ethyl methyl carbonate (EMC) + dimethyl carbonate (DMC) (2:4:4 volume ratio) was used.

### Example 2: Cu substrate/C-SPAN + denka black + water-based acrylic binder electrodeposition induction layer/protective layer containing PDDA-TFSI

A coin cell was prepared in the same manner as in Example 1, except that a composition for forming a protective layer (concentration: 10 %) in which PDDA-TFSI was dissolved in an NMP solvent was used to form the protective layer.

### Example 3: Cu substrate/C-SPAN + denka black + water-based acrylic binder electrodeposition induction layer/protective layer containing PVdF-HFP + PDDA-TFSI (3:7)

A coin cell was prepared in the same manner as in Example 1, except that a composition for forming a protective layer (concentration: 8 %) in which a binder obtained by mixing PVdF-HFP and PDDA-TFSI in a ratio of 3:7 was dissolved in an NMP solvent was used to form the protective layer.

### Example 4: Cu substrate/C-SPAN + denka black + water-based acrylic binder electrodeposition induction layer/protective layer containing PVdF-HFP + PDDA-TFSI (5:5)

A coin cell was prepared in the same manner as in Example 1, except that a composition for forming a protective layer (concentration: 8 %) in which a binder obtained by mixing PVdF-HFP and PDDA-TFSI in a ratio of 5:5 was dissolved in an NMP solvent was used to form the protective layer.

### Example 5: Cu substrate/C-SPAN + denka black + water-based acrylic binder electrodeposition induction layer/protective layer containing PVdF + PDDA-TFSI (5:5)

A coin cell was prepared in the same manner as in Example 1, except that a composition for forming a protective layer (concentration: 8 %) in which a binder obtained by mixing PVdF and PDDA-TFSI in a ratio of 5:5 was dissolved in an NMP solvent was used to form the protective layer.

### Example 6: Cu substrate/C-SPAN + denka black + water-based acrylic binder electrodeposition induction layer (10 µm)/protective layer containing PVdF + PDDA-TFSI (5:5)

A coin cell was prepared in the same manner as in Example 5, except that the thickness of the electrodeposition induction layer was changed to 10 µm.

### Example 7: Cu substrate/C-SPAN + denka black + water-based acrylic binder electrodeposition induction layer/protective layer containing PVdF + PDDA-TFSI (5:5) (10 µm)

A coin cell was prepared in the same manner as in Comparative Example 3, except that the thickness of the protective layer was changed to 10 µm.

### Comparative Example 1: Cu substrate negative electrode

A negative electrode and a coin cell were prepared in the same manner as in Example 1, except that the electrodeposition induction layer was not disposed.

### Comparative Example 2: Cu substrate/C-SPAN + denka black + water-based acrylic binder electrodeposition induction layer negative electrode (10 µm)

A coin cell was prepared in the same manner as in Example 1, except that the negative electrode included only the electrodeposition induction layer and did not include any coated protective layer.

### Comparative Example 3: Cu substrate negative electrode/protective layer containing PVdF-HFP + PDDA-TFSI (5:5)

A coin cell was prepared in the same manner as in Example 4, except that the negative electrode did not include the electrodeposition induction layer and only the protective layer was formed.

### Comparative Example 4: Cu substrate/C-SPAN + denka black + water-based acrylic binder electrodeposition induction layer/protective layer containing water-based acrylic binder

A negative electrode and a coin cell were prepared in the same manner as in Example 1, except that after forming the electrodeposition induction layer, a water-based acrylic binder was dissolved in water (D.I water) (8 % solution), coating was performed on the electrode position induction layer by a doctor blade method, and drying was performed at 80 °C in a vacuum oven to form a protective layer.

### Evaluation Example 1: SEM measurement

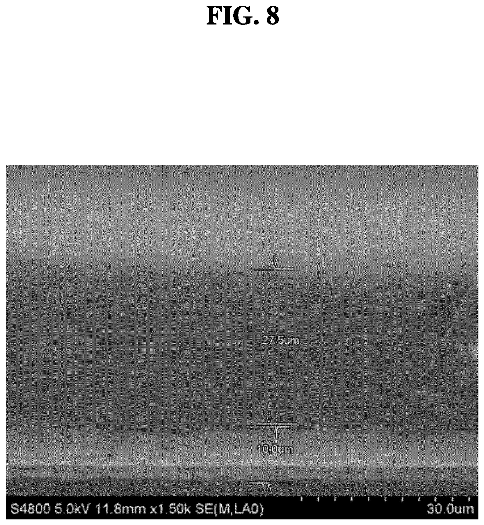

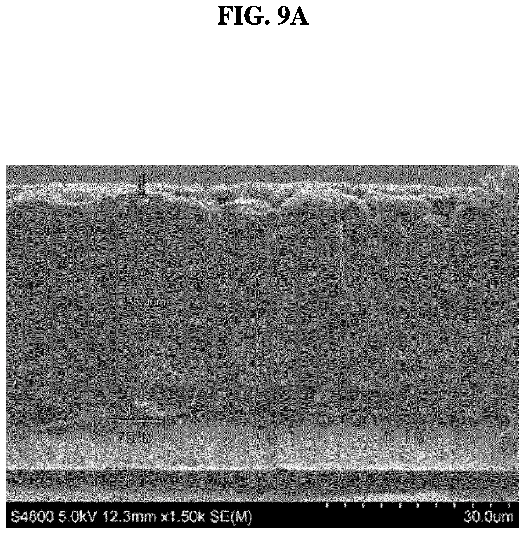

The coin cells prepared in Example 4 and Comparative Examples 1 to 3 were charged at a constant current at 0.1 C rate at 25 °C until a voltage reached 4.2 V (vs. Li) to form a lithium electrodeposition layer between the electrodeposition induction layer and the protective layer. After the lithium electrodeposition layer was formed between the electrode position induction layer and the protective layer (@SOC 100), the negative electrodes according to Example 4 and Comparative Example 1 to Comparative Example 3 were each observed by SEM. SEM observation images and the thickness of the lithium electrodeposition layer were measured and are described in Table 1 below, FIG. 8, and FIG. 9A to FIG. 9C.

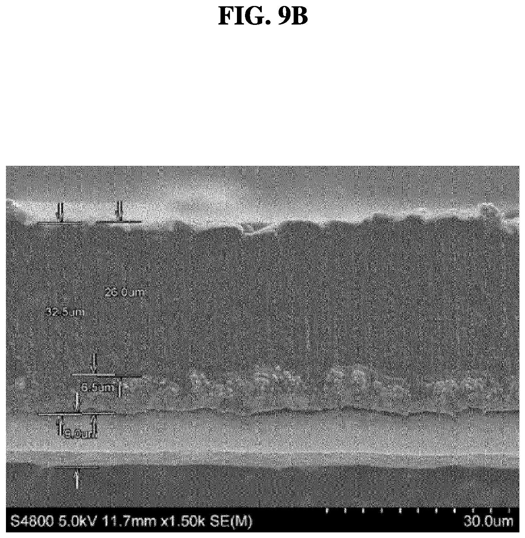

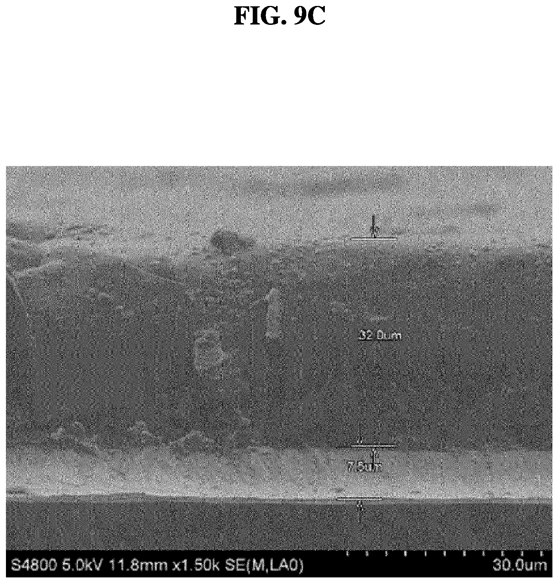

FIG. 8 is an SEM image of a negative electrode observed after a lithium electrodeposition layer was formed on the electrodeposition induction layer according to Example 4. FIG. 9A is an SEM image of a negative electrode observed after a lithium electrodeposition layer was formed on the electrodeposition induction layer according to Comparative Example 1. FIG. 9B is an SEM image of a negative electrode observed after a lithium electrodeposition layer was formed on the electrodeposition induction layer according to Comparative Example 2. FIG. 9C is an SEM image of a negative electrode observed after a lithium electrodeposition layer was formed on the electrode position induction layer according to Comparative Example 3.

### Evaluation Example 2: High-temperature charge/discharge characteristics evaluation

The coin cells prepared in Examples 1 to 5 and Comparative Examples 1 to 6 were charged at a constant current at 0.1 C rate at 45 °C until a voltage reached 4.3 V (vs. Li), and then charged at a constant voltage while maintaining 4.3 V until the current reached 0.05 C. After charging was completed, the pouch cell was rested for 10 minutes, and then discharged at a constant current at 0.1 C until a voltage reached 3.6 V (vs. Li) during discharge (first cycle).

Subsequently, the pouch cell was charged at a constant current at 0.2 C rate until a voltage reached 4.3 V (vs. Li), and then charged at a constant voltage while maintaining 4.3 V until the current reached 0.05 C. After charging was completed, the pouch cell was rested for 10 minutes, and then discharged at a constant current at 0.2 C until a voltage reached 3.6 V (vs. Li) during discharge (second cycle) (the first-second cycles are a formation step).

The pouch cell that had undergone the formation step was charged at a constant current at 0.2 C rate at 45 °C until a voltage reached 4.3 V (vs. Li), and then charged at a constant voltage while maintaining 4.3 V until the current reached 0.05 C. After charging was completed, the pouch cell was rested for 10 minutes, and then discharged at a constant current at 0.5 C until a voltage reached 3.6 V (vs. Li) during discharge, and this cycle was repeated 200 times. Some results of the charge/discharge experiment are shown in Table 1 below.

The capacity retention rate was calculated from the following Equation 1. 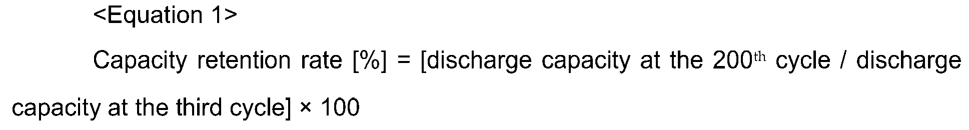 Capacity retention rate [%] = [discharge capacity at the 200th cycle / discharge capacity at the third cycle] × 100

**[Table 1]**

| | Negative electrode | | | | | |
|---|---|---|---|---|---|---|
| Categ ory | Electrodeposi tion Induction Layer | | Protective Layer | | Lithium Electrodepositi on Layer Thickness (µm) | Capacity Retention Rate |
| | Binder | Thic knes s | Binder | Thick ness | | |
| Exam ple 1 | Water-based Acrylic | 5 | PVdF-HFP | 5 | 27.8 | 76.8 |
| Exam ple 2 | Water-based Acrylic | 5 | PDDA-TFSI | 5 | 27.2 | 80.4 |
| Exam ple 3 | Water-based Acrylic | 5 | PVdF-HFP+PDDA-TFSI (3:7) | 5 | 27.3 | 84.2 |
| Exam ple 4 | Water-based Acrylic | 5 | PVdF-HFP+PDDA-TFSI (5:5) | 5 | 27.5 | 87 |
| Exam ple 5 | Water-based Acrylic | 5 | PVdF+PDD A-TFSI (5:5) | 5 | 28.1 | 79.8 |
| Exam ple 6 | Water-based Acrylic | 10 | PVdF+PDD A-TFSI (5:5) | 5 | 30.7 | 65.9 |
| Exam ple 7 | Water-based Acrylic | 5 | PVdF-HFP+PDDA-TFSI (5:5) | 10 | 29.4 | 59.0 |
| Comp arative Exam ple 1 | Cu Coil | | | | 36 | 75.3 |
| Comp arative Exam ple 2 | Water-based Acrylic | 5 | Excluded | - | 32.5 | 71.3 |
| Comp arative Exam ple 3 | Exclud ed | - | PVdF-HFP+PDDA-TFSI (5:5) | 10 | 32 | 69.9 |
| Comp arative Exam ple 4 | Water-based Acrylic | 10 | Water-based Binder | 10 | 33.2 | 68.3 |

Referring to FIGS. 8, 9A, and 9B, Example 4 including an electrodeposition induction layer including the first carbon-based material and a water-based binder and a protective layer including an organic solvent-based binder exhibited a relatively thinner lithium electrodeposition layer compared to Comparative Example 1 to Comparative Example 3, thereby showing an excellent electrodeposition density of the lithium electrodeposition layer.

Referring to Table 1, Example 1 to Example 5 including an electrodeposition induction layer including the first carbon-based material and a water-based binder and a protective layer including an organic solvent-based binder, and satisfying a specific thickness range, exhibited superior capacity retention rates compared to Comparative Example 1 to Comparative Example 4.

Although example embodiments have been described in detail with reference to the accompanying drawings, the present inventive concept is not limited to these examples. It will be apparent to a person of ordinary skill in the art that various modifications and variations may be derived within the scope of the technical idea described in the claims, and such modifications and variations also fall within the technical scope of the present inventive concept.

### List of Reference Numerals for Major Elements

| | | | |
|---|---|---|---|
| 1 | lithium battery | 2, | 20 negative electrode |
| 3, | 10 positive electrode | 4 | separator |
| 5 | battery case | 6 | cap assembly |
| 7 | battery structure | 8 | electrode tab |
| 11 | positive electrode current collector | 12 | positive electrode active material layer |
| 21 | negative electrode current collector | 22 | electrodeposition induction layer |
| 23 | protective layer | 24 | lithium electrodeposition layer |
| 30 | solid electrolyte layer | | |

## Claims

1. A negative electrode comprising:
a negative electrode current collector;
an electrodeposition induction layer disposed on the negative electrode current collector and comprising a first carbon-based material and a first binder; and
a protective layer disposed on the electrodeposition induction layer and comprising a second binder,
wherein the first carbon-based material is amorphous carbon comprising a nitrogen element,
a content of the nitrogen element is greater than 1 wt% based on a total weight of the electrodeposition induction layer, and
when the first binder is a water-based binder, the second binder is an organic solvent-based binder, and when the first binder is an organic solvent-based binder, the second binder is a water-based binder.

2. The negative electrode of claim 1,
wherein the first binder is a water-based binder, and the second binder is an organic solvent-based binder.

3. The negative electrode of claim 1,
wherein the first binder comprises a water-based acrylic binder, and the second binder comprises an organic solvent-based fluorine binder.

4. The negative electrode of claim 1,
wherein the content of the nitrogen element is 1.1 wt% to 10 wt% based on the total weight of the electrodeposition induction layer.

5. The negative electrode of claim 1,
wherein the first carbon-based material is a carbonized product of a polymer comprising a nitrogen element.

6. The negative electrode of claim 3,
wherein the polymer comprising the nitrogen element comprises carbonized sulfurized polyacrylonitrile (c-SPAN).

7. The negative electrode of claim 1,
wherein the first carbon-based material is the amorphous carbon further comprising a sulfur element.

8. The negative electrode of claim 7,
wherein a content of the sulfur element in the first carbon-based material is 0.1 to 50 wt%.

9. The negative electrode of claim 1,
wherein an average particle diameter of the first carbon-based material is 100 nm to 10 µm.

10. The negative electrode of claim 1,
wherein the electrode position induction layer further comprises a second carbon-based material, and the second carbon-based material is a carbon-based conductive material.

11. The negative electrode of claim 10,
wherein the second carbon-based material comprises carbon black, denka black, ketjen black, carbon nanotubes, carbon nanofibers, carbon nanobelts, fullerene, activated carbon, carbon fibers, or a combination thereof.

12. The negative electrode of claim 10,
wherein a content ratio of the first carbon-based material to the second carbon-based material present in the electrodeposition induction layer is 1:99 to 99:1.

13. The negative electrode of claim 1,
wherein a thickness of the electrodeposition induction layer is 1 µm to 50 µm.

14. The negative electrode of claim 1,
wherein the second binder comprises at least one selected from the group consisting of: a repeating unit (A) derived from an ethylene-based unsaturated monomer comprising a carboxyl group; a repeating unit (B) derived from an ethylene-based unsaturated monomer comprising a nitrile group; a repeating unit (C) derived from an ethylene-based unsaturated monomer comprising a polyalkylene glycol group; a repeating unit (D) derived from an ethylene-based unsaturated monomer comprising a fluorine group; and a repeating unit (E) derived from an ethylene-based unsaturated monomer comprising an ammonium group.

15. The negative electrode of claim 14,
wherein the second binder comprises PVdF, PVdF-HFP, PDDA-TFSI, lithium polyacrylic acid (LiPAA), polyacrylic acid (PAA), polyacrylonitrile (PAN), PEG methacrylate (PEGMA), or any combination thereof.

16. The negative electrode of claim 1,
wherein a thickness of the protective layer is 1 to 20 µm.

17. The negative electrode of claim 1,
further comprising a lithium electrodeposition layer disposed between the electrodeposition induction layer and the protective layer.

18. The negative electrode of claim 17,
wherein a thickness of the lithium electrodeposition layer is 50 µm or less.

19. A lithium battery comprising:
a positive electrode; the negative electrode of any one of claims 1 to 18; and
an electrolyte disposed between the positive electrode and the negative electrode.

20. The lithium battery of claim 19,
wherein the electrolyte is a liquid electrolyte, a gel electrolyte, a solid electrolyte, or a combination thereof.
